# EUROPÄISCHE PATENTSCHRIFT

(11) **EP 3 034 258 B1**
(45) Veröffentlichungstag und Bekanntmachung des Hinweises auf die Patenterteilung: **02.06.2021**
(21) Anmeldenummer: 15198433.3
(22) Anmeldetag: 08.12.2015
(51) Int. Cl.: B27M 1/08, B27D 5/00

(54) **VORRICHTUNG UND VERFAHREN ZUR BEARBEITUNG VON WERKSTÜCKEN**
DEVICE AND METHOD FOR PROCESSING OF WORKPIECES
DISPOSITIF ET PROCEDE DE TRAITEMENT DE PIECES USINEES

(30) Priorität: 17.12.2014 DE 102014226333
(43) Veröffentlichungstag der Anmeldung: 22.06.2016
(60) Teilanmeldung: 18214484.0
(73) Patentinhaber: HOMAG GmbH, 72296 Schopfloch (DE)
(72) Erfinder: Rathgeber, Peter, 72280 Dornstetten (DE)
(74) Vertreter: Grauel, Andreas

(56) Entgegenhaltungen:
- EP-A2- 1 281 491
- EP-A2- 2 095 922
- WO-A1-00/48804
- DE-A1- 2 408 250
- DE-A1- 3 248 497
- DE-A1- 3 913 765
- DE-A1- 19 920 014
- DE-A1-102010 019 345
- DE-A1-102013 008 595
- DE-U1- 8 715 746
- DE-U1- 9 307 220
- IT-A1- PD20 130 117
- IT-A1- RN20 120 053
- PREKWINKEL F: "Rechnergeführte Produktionssysteme für die Holzindustrie", HOLZ ALS ROH- UND WERKSTOFF, SPRINGER-VERLAG. BERLIN, DE, Bd. 49, Nr. 12, 1. Dezember 1991 (1991-12-01), Seiten 457-464, XP002122120, ISSN: 0018-3768

## Beschreibung

### Technisches Gebiet

Die Erfindung betrifft eine Vorrichtung zur Bearbeitung von Werkstücken gemäß dem Oberbegriff des Patentanspruchs 1 und ein Verfahren zur Bearbeitung von Werkstücken.

### Stand der Technik

Die Bearbeitung von Werkstücken umfasst dabei insbesondere die Formatbearbeitung, das Einbringen von Bohrungen oder ähnlichen Ausnehmungen und die Oberflächenbearbeitung und deren Vergütung, wie insbesondere deren Beschichtung wie beispielsweise eine Kantenbeschichtung des Werkstücks. Als Werkstücke sind dabei insbesondere Werkstücke, insbesondere auch unterschiedlicher Größe, aus Holz, Holzwerkstoffen und/oder aus Kunststoff Gegenstand der Bearbeitung. Dabei sind die Werkstücke insbesondere plattenförmige, stab- oder leistenförmige Werkstücke, die in der Vorrichtung bearbeitet werden, wobei die Werkstücke bevorzugt als Möbelteile oder als Teile von Bauelementen oder ähnlichem ausgebildet sind. So sind die Werkstücke bevorzugt Platten oder stabartige Werkstücke, die als Möbelteile zusammensetzbar sind. Auch können die Werkstücke beispielsweise als Tür oder Fensterteile oder ähnliches eingesetzt werden.

Solche Werkstücke werden üblicher Weise an ihren umlaufenden Kanten auf Maß bearbeitet und gegebenenfalls mittels weiterer Bearbeitungsschritte weiter bearbeitet.

Da in der Fertigung der Werkstücke ein flexibler Ablauf vorteilhaft ist und die Teile auch mit Losgröße 1 herzustellen sind, ist eine flexible Formatbearbeitung und die Bearbeitung von Werkstücken unterschiedlichster Formate nacheinander im Verfahrensablauf erwünscht. Dies wird insbesondere dann erwünscht, wenn die Werkstücke zu einem Auftrag in der Fertigung zusammen als Gesamtauftrag abzuwickeln sind, ohne dass Werkstücke anderer Aufträge dazwischen bearbeitet werden. Dadurch reduzieren sich der Logistikaufwand und die Lagerkosten. Es können ggf. auch Aufträge ineinander gemischt gefertigt werden um keine Leerlaufzeiten zu bekommen.

Allerdings ist es für die Einstellung einer Vorrichtung eher günstig, wenn nacheinander gleichformatige Werkstücke bearbeitet werden können, weil dann die Rüstzeiten zwischen der Bearbeitung verschiedener Formate gering gehalten werden können. Dies ist jedoch nicht immer realisierbar oder bedarf höheren Lageraufwands, weil die so bearbeiteten Teile unter Umständen länger zwischengelagert werden müssten, bevor sie weiterverwendet werden würden.

Eine Vorrichtung gemäß dem Oberbegriff des Patentanspruchs 1 geht beispielsweise aus der DE 39 13 765 A1 hervor.

Im Stand der Technik ist durch die DE 100 47 385 C2 eine Vorrichtung und ein Verfahren zur flexiblen Bearbeitung von Werkstücken bekannt geworden. Dieses Verfahren erlaubt eine flexible Formatbearbeitung von fortlaufend bewegten Werkstücken, wobei die Werkstücke ausgerichtet und an einer im Wesentlichen parallel zur Bewegungsrichtung verlaufenden ersten Seite im Durchlauf bearbeitet werden, wobei die Werkstücke danach im Durchlauf in Abhängigkeit von der Größe des Werkstücks um einen variablen Betrag quer zur Bewegungsrichtung verschoben, ausgerichtet und an einer der ersten Seite gegenüberliegenden, im Wesentlichen ebenfalls parallel zur Bewegungsrichtung verlaufenden zweiten Seite im Durchlauf bearbeitet werden. Dadurch wird das Werkstück im Durchlauf erst auf einer Seite und dann auf der gegenüberliegenden zweiten Seite bearbeitet. Durch die Führung des Bearbeitungsprozesses wird eine Gestaltung der Vorrichtung zur Bearbeitung benötigt, welche zwei im Wesentlichen gleiche oder ähnliche Bearbeitungsstationen aufweist, die in Bewegungsrichtung des Werkstücks hintereinander angeordnet sind. Dadurch wird die Vorrichtung sehr komplex, groß und kostenintensiv.

### Darstellung der Erfindung, Aufgabe, Lösung, Vorteile

Es ist die Aufgabe der Erfindung, eine Vorrichtung und ein Verfahren zur Bearbeitung von Werkstücken zu schaffen, mittels welcher bzw. mittels welchem eine Bearbeitung von Werkstücken auch mit flexiblen Formaten bis zur Losgröße 1 möglich ist, wobei ein einfacher Verfahrensablauf bei kostengünstiger Schaffung einer entsprechenden Vorrichtung erwünscht ist.

Diese Aufgabe zur Vorrichtung wird mit den Merkmalen von Anspruch 1 gelöst.

Die Erfindung betrifft eine Vorrichtung zur Bearbeitung von Werkstücken mit einer Transportvorrichtung zum Transport der Werkstücke, mit einer ersten Bearbeitungsvorrichtung zur Formatbearbeitung der umlaufenden Seiten des Werkstücks, mit einer Ausrichtvorrichtung zum Ausrichten des Werkstücks zur weiteren Bearbeitung einer Seite des Werkstücks in Bewegungsrichtung des Werkstücks, mit einer zweiten Bearbeitungsvorrichtung zum Bearbeiten der einen Seite des Werkstücks in Bewegungsrichtung des Werkstücks, mit einer Rückführeinrichtung, mittels welcher das Werkstück um einen vordefinierten Winkel drehbar ist und das Werkstück gedreht zur Ausrichtvorrichtung zurückführbar ist, zur Bearbeitung einer der weiteren Seiten des Werkstücks in Bewegungsrichtung des Werkstücks. Dadurch wird es gemäß des erfindungsgemäßen Gedankens möglich, dass die Bearbeitung der umlaufenden Seiten auf Maß und Winkel als so genannter Fertigschnitt mit der ersten Bearbeitungsvorrichtung vollständig durchgeführt wird und vor der weiteren Kantenbearbeitung mit nachfolgenden Bearbeitungsvorrichtungen erfolgen kann, so dass mit nachfolgenden Bearbeitungsschritten vorteilhaft nur noch eine weitere Kantenbearbeitung der anderen Kanten durchgeführt werden muss. Dabei können allerdings auch noch Bohrungen, Fräsen von Profilen, Nuten, Falzen etc. in den jeweiligen Bearbeitungsschritten der Seiten des Werkstücks erfolgen, wobei dies vorteilhaft nach dem so genannten Fertigschnitt erfolgt. Dadurch wird erreicht, dass der sehr genau durchzuführende Fertigschnitt vor der weiteren Bearbeitung erfolgt und dann im gegebenenfalls mehrfachen Durchlauf die Seiten bzw. Kanten des Werkstücks bearbeitet werden.

Dabei ist es auch zweckmäßig, wenn der zweiten Bearbeitungsvorrichtung eine dritte Bearbeitungsvorrichtung zur Bearbeitung einer zweiten Seite des Werkstücks nachgeordnet ist. So kann die Taktzeit reduziert werden.

So ist es auch vorteilhaft, wenn die dritte Bearbeitungsvorrichtung der zweiten Bearbeitungsvorrichtung in Bewegungsrichtung des Werkstücks nachgeordnet ist. So kann ein geeigneter Materialfluss realisiert werden.

Dabei ist es vorteilhaft, wenn die dritte Bearbeitungsvorrichtung vor der Rückführeinrichtung oder in der Rückführeinrichtung angeordnet ist. Dies kann je nach Platzverhältnissen aus Bauraumgründen vorteilhaft sein.

Ein Ausführungsbeispiel der Erfindung betrifft eine Vorrichtung zur Bearbeitung von Werkstücken mit einer Transportvorrichtung zum Transport der Werkstücke, mit einer ersten Bearbeitungsvorrichtung zur Formatbearbeitung der umlaufenden Seiten des Werkstücks, mit zumindest einer ersten Ausrichtvorrichtung zum Ausrichten des Werkstücks zur weiteren Bearbeitung einer ersten Seite des Werkstücks in Bewegungsrichtung des Werkstücks, mit einer zweiten Bearbeitungsvorrichtung und ggf. n-ten weiteren Bearbeitungsvorrichtungen zum Bearbeiten der einen ersten Seite des Werkstücks in Bewegungsrichtung des Werkstücks, insbesondere mit einer dritten Bearbeitungsvorrichtung zum Bearbeiten einer der weiteren Seiten des Werkstücks in Bewegungsrichtung des Werkstücks, insbesondere mit einer vierten Bearbeitungsvorrichtung zum Bearbeiten einer der weiteren Seiten des Werkstücks und insbesondere mit einer fünften Bearbeitungsvorrichtung zum Bearbeiten einer der weiteren Seiten des Werkstücks, wobei zumindest eine Dreheinrichtung vorgesehen ist, zum Drehen des Werkstücks.

Dabei ist es auch zweckmäßig, wenn die zweite Bearbeitungsvorrichtung und die dritte Bearbeitungsvorrichtung und folgende Bearbeitungen zwei gegenüberliegende Seiten des Werkstücks bearbeiten. Dadurch können eine einfache Führung und ein einfacher Transport durch die Vorrichtung erfolgen.

Weiterhin ist es zweckmäßig, wenn die vierte Bearbeitungsvorrichtung und die fünfte Bearbeitungsvorrichtung zwei gegenüberliegende Seiten des Werkstücks bearbeiten. Dadurch können eine einfache Führung und ein einfacher Transport durch die Vorrichtung erfolgen.

Es ist auch vorteilhaft, wenn die Dreheinrichtung das Werkstück um 90° oder um ein Vielfaches von 90° dreht. Auch können mehr als eine Dreheinrichtung vorgesehen sein, um das jeweilige Werkstück zu drehen.

Auch ist es vorteilhaft, wenn die zumindest eine Dreheinrichtung nach der zweiten Bearbeitungsvorrichtung, und/oder nach der dritten Bearbeitungsvorrichtung und/oder nach der vierten Bearbeitungsvorrichtung vorgesehen ist, um das Werkstück zu drehen.

Weiterhin ist es zweckmäßig, wenn die Dreheinrichtung zwischen der dritten Bearbeitungsvorrichtung und der vierten Bearbeitungsvorrichtung angeordnet ist.

Dabei ist es vorteilhaft, wenn die Transportvorrichtung derart vorgesehen ist, um ein Werkstück der ersten Bearbeitungsvorrichtung zuzuführen. Die Transportvorrichtung transportiert das Werkstück von einer Zuführung zur ersten Bearbeitungsvorrichtung und vorteilhaft auch wieder von dieser weg und hin zur zweiten Bearbeitungsvorrichtung. Dabei kann die Bearbeitung in der ersten Bearbeitungsvorrichtung entweder im Ruhezustand des ersten Werkstücks oder in einem bewegten Zustand des Werkstücks erfolgen, wobei die Bearbeitung in der zweiten Bearbeitungsvorrichtung vorteilhaft in einem bewegten Zustand, wie im Durchlauf erfolgt. Alternativ kann die Bearbeitung in der zweiten Bearbeitungsvorrichtung auch in einem ruhenden Zustand des Werkstücks erfolgen.

So ist es gemäß des erfindungsgemäßen Gedankens vorteilhaft, wenn mittels der ersten Bearbeitungsvorrichtung die Formatbearbeitung des Werkstücks vornehmbar ist, so dass das Werkstück derart bezüglich Maß und Winkel endbearbeitbar, wie insbesondere zuschneidbar, ist, so dass es anschließend endbearbeitet ist. Dadurch entfallen spätere Zuschnitte, um das Endmaß zu erreichen.

Auch ist es vorteilhaft, wenn die Rückführeinrichtung derart vorgesehen ist, dass mit einer Dreheinrichtung das Werkstück um einen vordefinierten Winkel um eine Achse senkrecht zur Ebene des Werkstücks drehbar ist, damit in Abhängigkeit der Gestalt des Werkstücks nach der ersten Seite eine zweite Seite bearbeitbar ist. So ist es möglich, dass ein Werkstück auf einer ersten Seite bearbeitet wird, anschließend um einen vorgebbaren Winkel gedreht wird und danach an einer zweiten Seite bearbeitet wird, wobei bei Bedarf auch weitere Seiten anschließend bearbeitet werden können, bevor das Werkstück aus der Vorrichtung als fertig bearbeitet ausgeschleust werden kann.

Dabei ist es vorteilhaft, wenn bei der Bearbeitung eines rechteckigen Werkstücks eine Drehung um 90° oder um ein Vielfaches von 90° vornehmbar ist. So kann bei einer Bearbeitung von über Eck liegenden Seiten jeweils eine Drehung um 90° erfolgen, so dass nacheinander um 90° verdrehte Seiten bearbeitet werden. Sollen nur die beiden gegenüberliegenden Seiten bearbeitet werden, kann auch eine Drehung um 180° vorgenommen werden oder alternativ zwei Drehungen um 90°. Wird ein Werkstück bearbeitet, das nicht rechteckig ist, so kann der Drehwinkel vorteilhaft der Geometrie des Werkstücks angepasst werden.

Gemäß einer Ausführungform ist es weiterhin vorteilhaft, wenn in der Rückführeinrichtung ein Werkstückspeicher aufgenommen ist, zum Zwischenspeichern von Werkstücken. Dies ist dann vorteilhaft, wenn die zweite Bearbeitungsvorrichtung sowohl aus Richtung der ersten Bearbeitungsvorrichtung mit Werkstücken versorgt wird als auch aus der Rückführeinrichtung. Dadurch kann eine Kollision der Werkstücke vermieden werden und die Kapazität der Bearbeitung erhöht werden.

Besonders vorteilhaft ist es, wenn die Transportvorrichtung eine Riemen-, Band-, Ketten-, Schlitten- und/oder Rollentransportvorrichtung aufweist, mittels welcher das Werkstück ausgehend von einer Zurverfügungstellung des Werkstücks zur ersten Bearbeitungsvorrichtung und/oder zur zweiten Bearbeitungsvorrichtung transportierbar ist. Dabei kann das Werkstück in der ersten Bearbeitungsvorrichtung übernommen und zur Bearbeitung gehalten und festgesetzt werden, wobei es nach der Bearbeitung wieder der Transportvorrichtung zugeführt werden kann, um es weiter der zweiten Bearbeitungsvorrichtung zuzuführen. Dabei kann die erste Transportvorrichtung auch durch die erste Bearbeitungsvorrichtung unterbrochen sein, so dass die erste Transportvorrichtung das Werkstück zur ersten Bearbeitungsvorrichtung transportiert, dort übergibt und nach der Bearbeitung von der ersten Bearbeitungsvorrichtung wieder übergeben bekommt und zur zweiten Bearbeitungsvorrichtung transportiert.

Dabei ist es vorteilhaft, wenn die Rückführeinrichtung eine Rücktransportvorrichtung aufweist, welche insbesondere als eine Riemen-, Band-, Ketten-, Schlitten- und/oder Rollentransportvorrichtung ausgebildet ist, mittels welcher das Werkstück entgegen der Transportrichtung der Transportvorrichtung zurück transportierbar ist. Dadurch kann das gedrehte Werkstück die zweite Bearbeitungsvorrichtung wiederholt durchlaufen, um jeweils andere Seiten daran zu bearbeiten.

Dabei ist es besonders vorteilhaft, wenn die Rückführeinrichtung zumindest eine erste Transfervorrichtung umfasst, mittels welcher ein Werkstück von der Transportvorrichtung zur Rücktransportvorrichtung verlagerbar ist. So kann eine Brücke zwischen der Transportvorrichtung und der Rücktransportvorrichtung vorgesehen sein, mittels welcher die Werkstücke überführt werden, um sie zurück zu transportieren.

Dabei ist es auch vorteilhaft, wenn die Rückführeinrichtung zumindest eine zweite Transfervorrichtung umfasst, mittels welcher ein Werkstück von der Rücktransportvorrichtung zur Transportvorrichtung verlagerbar ist. So kann das Werkstück auch wieder zurück zur Transportvorrichtung geführt werden und in den Transportvorgang der Transportvorrichtung eingeschleust werden.

Besonders vorteilhaft ist es, wenn die erste und die zweite Transfervorrichtung als getrennt ausgebildete Transfervorrichtungen vorgesehen sind oder als eine gemeinsame Transfervorrichtung ausgebildet sind, welche beide Verlagerungen vornimmt. Entsprechend können die Transfervorrichtungen unabhängig voneinander agieren und Werkstücke transferieren oder eine Transfervorrichtung kann beide Transferwege übernehmen und die Werkstücke sowohl von der Transportvorrichtung zur Rücktransportvorrichtung übertragen als auch von der Rücktransportvorrichtung zur Transportvorrichtung.

Besonders vorteilhaft ist es, wenn die zweite Bearbeitungsvorrichtung eine Kantenbearbeitungsvorrichtung ist. So kann nach dem Fertigschnitt des Werkstücks die Seite des Werkstücks, also insbesondere die Kante bzw. Schmalseite, mittels einer Kantenbearbeitungsvorrichtung bearbeitet werden.

Dabei ist es besonders vorteilhaft, wenn die Kantenbearbeitungsvorrichtung eine Kantenanleimvorrichtung aufweist. So kann auf die Kante des Werkstücks ein Kantenmaterial, wie insbesondere ein Kantenstreifen, eine Kantenleiste etc. aufgebracht werden, wie insbesondere aufgeklebt werden.

Dabei ist es weiterhin vorteilhaft, wenn die Kantenbearbeitungsvorrichtung eine Kantenversäuberungsvorrichtung aufweist. Nach dem Anbringen des Kantenmaterials auf der Kante bzw. Schmalseite des Werkstücks kann dieses Kantenmaterial noch mittels zumindest eines Ziehmessers, mittels zumindest eines Fräsers oder ähnlichem bearbeitet werden, um überstehendes Material oder Kleber abzutragen, Kanten abzurunden oder ähnliches.

Auch ist es vorteilhaft, wenn die erste Bearbeitungsvorrichtung einen Werkstücktisch mit Werkstücktransportmitteln zum Zuführen und Abführen des Werkstücks und Werkstückhaltemitteln zum Halten des Werkstücks aufweist, und Werkzeugmittel zur Bearbeitung des Werkstücks und Vorschubmittel zum Verlagern der Werkzeugmittel aufweist. Dabei ist unter einem Werkstücktisch ein Träger des Werkstücks zu verstehen, welcher dazu dient, das Werkstück bei der Bearbeitung zu tragen. Dabei ist unter einem Werkstücktransportmittel ein Mittel zu verstehen, welches das Werkstück in die erste Bearbeitungsvorrichtung führt und aus dieser wieder heraus führt. Im einfachsten Fall ist dies die Transportvorrichtung oder es ist eine in den Werktisch integrierte gesonderte Vorrichtung oder eine damit verbundene Vorrichtung. Die Werkstückhaltemittel zum Halten des Werkstücks sind dabei Mittel, weiche dazu dienen, das Werkstück während der Bearbeitung zu halten, damit es sich bei der Bearbeitung nicht bewegt, so dass der Fertigschnitt möglichst exakt durchgeführt werden kann.

Das oder die Werkstücktransportmittel ist bzw. sind bevorzugt als Riemen,-Band-, Ketten-, Schlitten- und/oder Rollentransportvorrichtung ausgebildet.

Das oder die Werkstückhaltemittel ist bzw. sind bevorzugt als Spannmittel, wie insbesondere als Vakuumspannelemente oder Greifer oder ähnliches ausgebildet.

Das oder die Werkzeugmittel sind vorteilhafterweise Fräs-, Säge- und/oder Bohrmittel, um das Werkstück zu bearbeiten.

Dabei ist es besonders vorteilhaft, wenn die Vorschubmittel einen Arm, einen Ausleger oder ein Portal aufweisen, entlang dessen die Werkzeugmittel verlagerbar sind. So können die Werkzeugmittel damit geführt werden, so dass sie beispielsweise einen exakten Schnitt vornehmen können.

Dabei ist es besonders vorteilhaft, wenn die Vorschubmittel einen verlagerbaren Arm, einen Ausleger oder ein Portal aufweisen, mittels welchem die Werkzeugmittel verlagerbar sind. So können die Werkzeugmittel auch damit verlagerbar sein und gegebenenfalls nicht nur entlang dessen verlagerbar sein.

Dabei ist es besonders vorteilhaft, wenn die Werkzeugmittel entlang eines verlagerbaren Arms, Auslegers oder Portals in einer ersten Richtung verlagerbar sind und mittels des Arms, des Auslegers oder des Portals in einer zweiten Richtung verlagerbar sind. So kann eine Bewegung der Werkzeugmittel in zwei Bewegungsrichtungen vorgenommen werden, um das Werkstück bearbeiten, wie insbesondere auf das Endmaß zuschneiden und gegebenenfalls konturieren zu können.

Dabei ist es besonders vorteilhaft, wenn zwei Werkzeug mittel vorgesehen sind, die unabhängig voneinander entlang des Arms, Auslegers oder Portals verlagerbar sind. So kann die Bearbeitungsgeschwindigkeit pro Werkstück erhöht werden, wenn die beiden Werkzeugmittel insbesondere auch gleichzeitig eingesetzt werden können.

Die Aufgabe zum Verfahren wird mit den Merkmalen von Anspruch 25 gelöst.

Ein Ausführungsbeispiel der Erfindung betrifft ein Verfahren zur Bearbeitung von Werkstücken mit einer Vorrichtung, welche eine Transportvorrichtung zum Transport des Werkstücks aufweist, mit einer ersten Bearbeitungsvorrichtung zur Formatbearbeitung der umlaufenden Seiten des Werkstücks, mit einer Ausrichtvorrichtung zum Ausrichten des Werkstücks zur weiteren Bearbeitung einer Seite des Werkstücks in Bewegungsrichtung des Werkstücks, mit einer zweiten Bearbeitungsvorrichtung zum Bearbeiten der einen Seite des Werkstücks in Bewegungsrichtung des Werkstücks, mit einer Rückführeinrichtung, mittels welcher das Werkstück um einen vordefinierten Winkel gedreht wird und das Werkstück gedreht zur Ausrichtvorrichtung zurückgeführt wird, zur Bearbeitung einer der weiteren Seiten des Werkstücks in Bewegungsrichtung. So kann eine erste Bearbeitung mit einem initialen Fertigschnitt und einer nachfolgenden Bearbeitung der Seiten oder Kanten in einem weiteren nachfolgenden Schritt erfolgen, wobei bei mehreren zu bearbeitenden Seiten das Werkstück zurückgeführt wird und die Seiten nacheinander bearbeitet werden.

Besonders vorteilhaft ist es, wenn die Transportvorrichtung ein Werkstück der ersten Bearbeitungsvorrichtung zuführt und/oder von dieser wieder weg führt. Auch ist es vorteilhaft, wenn mittels der ersten Bearbeitungsvorrichtung die Formatbearbeitung des Werkstücks vorgenommen wird, so dass das Werkstück bezüglich Maß und Winkel endbearbeitet ist, wie insbesondere mit einem Fertigschnitt, zugeschnitten ist.

Gemäß einer Ausführungform ist es vorteilhaft, wenn die Rückführeinrichtung derart vorgesehen ist, dass mit einer Dreheinrichtung das Werkstück um einen vordefinierten Winkel um eine Achse senkrecht zur Ebene des Werkstücks gedreht wird, damit in Abhängigkeit der Gestalt des Werkstücks nach der ersten Seite eine zweite Seite bearbeitet wird.

Auch ist es vorteilhaft, wenn die Rückführeinrichtung derart vorgesehen ist, dass mit einer Dreheinrichtung das Werkstück um einen vordefinierten Winkel um eine Achse senkrecht zur Ebene des Werkstücks gedreht wird, damit in Abhängigkeit der Gestalt des Werkstücks nach der n-ten Seite eine (n+1)-te Seite bearbeitet wird.

Entsprechend ist es zweckmäßig, wenn bei der Bearbeitung eines rechteckigen Werkstücks eine Drehung um 90° oder um ein Vielfaches von 90° vorgenommen wird.

Weiterhin ist es vorteilhaft, wenn in der Rückführeinrichtung ein Werkstückspeicher aufgenommen ist, mittels welchem Werkstücke durch Einbringen in den Zwischenspeicher gespeichert werden können und/oder durch Austragen aus dem Zwischenspeicher der weiteren Bearbeitung wieder zugeführt werden können.

Gemäß einer Ausführungform ist es vorteilhaft, wenn die zweite Bearbeitungsvorrichtung eine Kantenbearbeitungsvorrichtung ist, mittels welcher ein Kantenband auf die Schmalseite des Werkstücks aufgebracht wird und/oder versäubert wird.

Entsprechend ist es zweckmäßig, wenn das Werkstück der ersten Bearbeitungsvorrichtung zugeführt wird, auf einem Werkstücktisch gehalten wird und mit einem Werkzeugmittel zur Bearbeitung des Werkstücks bearbeitet wird.

Besonders vorteilhaft ist es, wenn das oder die Werkzeugmittel entlang eines verlagerbaren Arms, Auslegers oder Portals in einer ersten Richtung verlagert werden und mittels des Arms, des Auslegers oder des Portals in einer zweiten Richtung verlagert werden, um das Werkstück zu bearbeiten. Dadurch kann eine exakte Bearbeitung bei hoher Bearbeitungsfrequenz durchgeführt werden.

Besonders vorteilhaft ist es, wenn zwei Werkzeugmittel vorgesehen sind, die unabhängig voneinander entlang des Arms, Auslegers oder Portals verlagert werden können.

Auch ist es besonders vorteilhaft, wenn ein erstes oder ein zweites Werkzeugmittel entlang des Arms, Auslegers oder Portals verlagert wird, um eine erste Seite des Werkstücks zu bearbeiten, wobei das erste und das zweite Werkzeugmittel mit dem Arm, Ausleger oder Portal verlagert werden, um eine zweite und dritte Seite zu bearbeiten und ein erstes oder ein zweites Werkzeugmittel entlang des Arms, Auslegers oder Portals verlagert wird, um eine vierte Seite des Werkstücks zu bearbeiten.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Figur 1: eine schematische Ansicht einer erfindungsgemäßen Vorrichtung,
- Figur 2: eine schematische Ansicht einer ersten Bearbeitungsvorrichtung,
- Figur 3: eine schematische Ansicht einer Bearbeitung eines Werkstücks,
- Figur 4: eine schematische Ansicht eines erfindungsgemäßen Ausführungsbeispiels gemäß Figur 1,
- Figur 5: eine schematische Ansicht eines weiteren erfindungsgemäßen Ausführungsbeispiels,
- Figur 6: eine schematische Ansicht eines weiteren erfindungsgemäßen Ausführungsbeispiels,
- Figur 7: eine schematische Ansicht eines nicht erfindungsgemäßen Ausführungsbeispiels,
- Figur 8: eine schematische Ansicht eines weiteren nicht erfindungsgemäßen Ausführungsbeispiels, und
- Figur 9: eine schematische Ansicht eines weiteren nicht erfindungsgemäßen Ausführungsbeispiels.

### Bevorzugte Ausführung der Erfindung

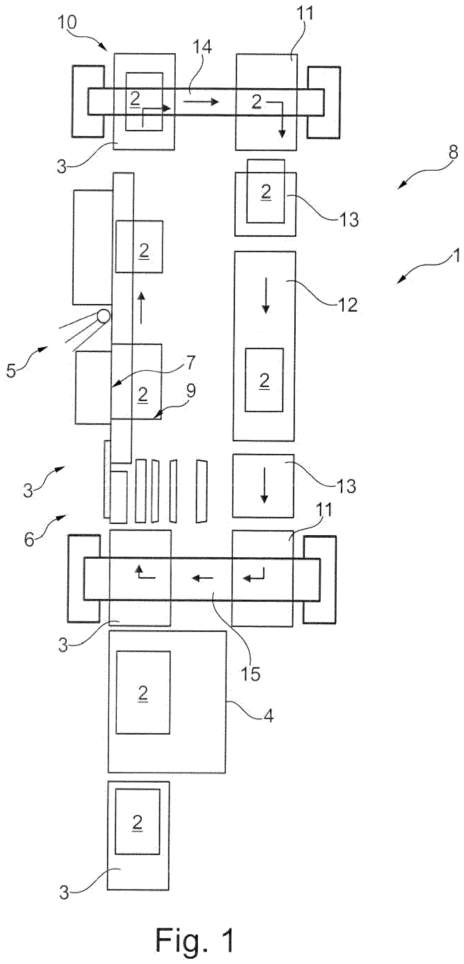

Die Figur 1 zeigt in einer schematischen Darstellung eine Vorrichtung 1 zur Bearbeitung von Werkstücken 2. Dabei sind die Werkstücke 2 bevorzugt Werkstücke 2 aus Holz, einem Holzwerkstoff oder aus Kunststoff. Als Werkstücke 2 sind insbesondere auch Werkstücke unterschiedlicher Größe bearbeitbar, wobei bevorzugt insbesondere plattenförmige, stab- oder leistenförmige Werkstücke 2 bearbeitbar sind. Die Werkstücke 2 sind dabei bevorzugt Werkstücke, die als Möbelteile oder als Teile von Bauelementen oder ähnlichem dienen. Die Werkstücke sind entsprechend bevorzugt Platten oder stabartige Werkstücke, die als Möbelteile zusammensetzbar sind. Auch können die Werkstücke beispielsweise als Tür oder als Fensterteile oder ähnliches verwendbar sein.

Die Bearbeitung von Werkstücken 2 umfasst dabei die Formatbearbeitung, insbesondere das Einbringen von Bohrungen oder ähnlichen Ausnehmungen, eine Profilierung und/oder die Oberflächenbearbeitung und deren Vergütung, wie insbesondere deren Beschichtung wie beispielsweise eine Kantenbeschichtung des Werkstücks.

Die Vorrichtung weist eine Transportvorrichtung 3 zum Transport der Werkstücke 2 auf. Die Transportvorrichtung dient dabei dem Transport der Werkstücke, insbesondere ausgehend von einer Werkstückzurverfügungstellung hin zu einer ersten Bearbeitungsvorrichtung 4 und weg von dieser ersten Bearbeitungsvorrichtung 4 hin zu einer zweiten Bearbeitungsvorrichtung 5 und weg von dieser zweiten Bearbeitungsvorrichtung 5.

Die erste Bearbeitungsvorrichtung 4 dient der zumindest im Wesentlichen vollständigen Formatbearbeitung der umlaufenden Seiten des Werkstücks 2. Damit wird vor der weiteren Bearbeitung das Werkstück auf Maß und Winkel zugeschnitten, also mit dem so genannten Fertigschnitt bearbeitet.

Der ersten Bearbeitungsvorrichtung 4 ist in Transport- und Bearbeitungsrichtung nachfolgend eine Ausrichtvorrichtung 6 vorgesehen, mittels welcher die Werkstücke 2 ausgerichtet und geführt transportiert werden, so dass sie in der nachfolgenden zweiten Bearbeitungsvorrichtung 5 an einer ihrer Seiten bearbeitet werden können. Das Ausrichten des Werkstücks 2 dient der weiteren Bearbeitung einer Seite 7 des Werkstücks 2 in Bewegungsrichtung des Werkstücks 2. Die Ausrichtvorrichtung kann dabei ein Lineal oder ähnliches umfassen, entlang dessen das Werkstück verfahrbar ist.

Nach dem Durchlaufen der zweiten Bearbeitungsvorrichtung 5 wird das einseitig bearbeitete Werkstück entweder aus der Vorrichtung ausgeschleust oder es wird mit einer Rückführeinrichtung 8 zur Ausrichtvorrichtung 6 zurückgeführt. Dabei wird das Werkstück 2 vor dem Abschluss der Rückführung um einen definierten Winkel gedreht, so dass das Werkstück 2 anschließend in der zweiten Bearbeitungsvorrichtung 5 an einer Seite 9 bearbeitet werden kann, die nicht die Seite 7 ist, die zuvor bereits bearbeitet wurde. Entsprechend wird das Werkstück 2 so um einen Winkel gedreht, dass eine andere Seite 9 an die zweite Bearbeitungsvorrichtung 5 geführt wird zur weiteren Bearbeitung. Dieser Vorgang kann dann so oft wiederholt werden, bis alle zu bearbeitenden Seiten des Werkstücks 2 bearbeitet sind und danach kann das Werkstück 2 aus der Vorrichtung 1 ausgeschleust werden.

Die Rückführeinrichtung 8 ist dabei derart ausgebildet, dass sie mit einer Dreheinrichtung 10 versehen ist, welche das Werkstück 2 um einen vordefinierten Winkel um eine Achse senkrecht zur Ebene des Werkstücks 2 dreht, damit im Anschluss daran und insbesondere in Abhängigkeit der Gestalt des Werkstücks 2 nach der ersten Seite 7 eine zweite Seite 9 bearbeitet werden kann, ist das Werkstück 2 beispielsweise rechteckig, so kann bei der Bearbeitung eine Drehung um 90° oder um ein Vielfaches von 90° vorgenommen werden, um die zu bearbeitenden Seiten der Bearbeitung zuzuführen. Ist die Gestalt des Werkstücks anderweitig, so kann der Drehwinkel entsprechend angepasst werden. Dabei kann auch eine Winkelkombination von 180°, 90° und 180° nach jeder Bearbeitung vorgesehen sein.

Die Rückführeinrichtung 8 weist eine Rücktransportvorrichtung 11 auf, mittels welcher die Werkstücke 2 zurücktransportiert werden können. Dabei kann in die Rücktransportvorrichtung 11 oder allgemein in die Rückführeinrichtung 8 ein Werkstückspeicher 12 integriert sein, welcher Werkstücke 2 zwischenspeichern kann. Der Werkstückspeicher 12 kann dabei als Förderband mit Zwei- oder Mehretagenpuffer ausgebildet sein, wobei zur Zuführung und Abführung Steigbänder 13 vorgesehen sein können. Zwischen der Transportvorrichtung 3 und der Rücktransportvorrichtung 11 ist zumindest eine erste Transfervorrichtung 14 vorgesehen, mittels welcher ein Werkstück 2 von der Transportvorrichtung 3 zur Rücktransportvorrichtung 11 verlagert werden kann. So kann ein Werkstück 2 automatisiert nach der Bearbeitung einer Seite 7 durch die zweite Bearbeitungsvorrichtung 5 zurücktransportiert werden, um eine weitere Seite 9 von der zweiten Bearbeitungsvorrichtung 5 bearbeiten zu lassen.

Weiterhin weist die Rückführeinrichtung 8 zumindest eine zweite Transfervorrichtung 15 auf, mittels welcher ein Werkstück 2 von der Rücktransportvorrichtung 11 zur Transportvorrichtung 3 verlagert werden kann. Damit wird das Werkstück 2 der weiteren Bearbeitung durch die zweite Bearbeitungsvorrichtung 5 zugeführt.

Bei einem Ausführungsbeispiel der erfindungsgemäßen Vorrichtung 1 können die erste und die zweite Transfervorrichtung 14, 15 jeweils als getrennt ausgebildete Transfervorrichtungen vorgesehen sein. Alternativ dazu können die Transfervorrichtungen auch als eine gemeinsame bzw. einzige Transfervorrichtung ausgebildet sein, welche beide Verlagerungen von der Transportvorrichtung zur Rücktransportvorrichtung bzw. umgekehrt vornimmt. Dabei kann eine Transfervorrichtung 14 als Portalversetzer ausgebildet sein, um die Versetzung von der Transportvorrichtung 3 zur Rücktransportvorrichtung 11 zu bewirken. Die andere Transfervorrichtung 15 kann als Portalbeschicker zur Portalbeschickung ausgebildet sein.

Gemäß eines Ausführungsbeispiels der Erfindung ist die Transportvorrichtung 3 insbesondere eine Riemen-, Band-, Ketten-, Schlitten- und/oder Rollentransportvorrichtung, eine Kurvenbahn, eine Kurvenrollenbahn, eine Winkelrollenbahn, ein Roboter oder weist eine solche Vorrichtung zumindest abschnittweise auf, mittels welcher bzw. welchen das Werkstück 2 ausgehend von einer Zurverfügungstellung des Werkstücks 2 zur ersten Bearbeitungsvorrichtung 4 und/oder zur zweiten Bearbeitungsvorrichtung 5 transportiert wird. Dabei kann die Transportvorrichtung 3 auch abschnittweise oder modular ausgebildet sein, um vor der ersten Bearbeitungsvorrichtung 4 und/oder nach der ersten Bearbeitungsvorrichtung 4 und/oder vor der zweiten Bearbeitungsvorrichtung 5 und/oder nach der zweiten Bearbeitungsvorrichtung 5 und/oder durch die bzw. entlang der ersten Bearbeitungsvorrichtung 4 und/oder durch die bzw. entlang der zweiten Bearbeitungsvorrichtung 5 die Werkstücke zu transportieren.

Gemäß eines Ausführungsbeispiels der Erfindung ist die Rücktransportvorrichtung 11 insbesondere eine Riemen-, Band-, Ketten-, Schlitten- und/oder Rollentransportvorrichtung oder weist eine solche zumindest abschnittweise auf, mittels welcher bzw. welchen das Werkstück zurück transportiert wird. Mit der Rücktransportvorrichtung 11 wird das Werkstück 2 entgegen der Transportrichtung der Transportvorrichtung 3 zurück transportiert.

Die erste Bearbeitungsvorrichtung 4 bewirkt die Formatbearbeitung des Werkstücks 2. Damit wird das Werkstück 2 bezüglich Maß und Winkel endbearbeitet, so dass es nicht mehr weiter auf Format gefräst bzw. zugeschnitten werden muss. Dabei ist die erste Bearbeitungsvorrichtung 4 eine insbesondere gekapselte Vorrichtung, die besonders geräuscharm ist und bei welcher die Staubemission reduziert ist. Sie kann beispielsweise als stationäre Säge- und/oder Frässtation ausgebildet sein. Diese erste Bearbeitungsvorrichtung 4 entspricht im Wesentlichen auch den ersten Bearbeitungsvorrichtungen 4 der weiteren Ausführungsbeispiele.

Bei einem Ausführungsbeispiel der Erfindung ist die zweite Bearbeitungsvorrichtung 5 eine Kantenbearbeitungsvorrichtung. Sie dient der Bearbeitung bzw. Aufbringung einer Kante oder eines Kantenstreifens auf eine Seite 7, 9 des Werkstücks 2. Die Kantenbearbeitungsvorrichtung kann dabei eine Kantenanleimvorrichtung aufweisen, mittels welcher ein Kantenstreifen auf die Seite des Werkstücks anbringbar oder anklebbar ist. Dabei kann die Kantenbearbeitungsvorrichtung weiterhin auch eine Kantenversäuberungsvorrichtung aufweisen, mittels welcher die aufgebrachte bzw. aufgeklebte Kante endbearbeitet werden kann. Dabei kann die Kante mit dem restlichen Werkstück beispielsweise egalisiert werden, so dass ein etwaiger Überstand abgetragen wird. Auch kann die Kante auf Maß gebracht werden. Diese zweite Bearbeitungsvorrichtung entspricht im Wesentlichen auch den weiteren Bearbeitungsvorrichtungen der weiteren Ausführungsbeispiele.

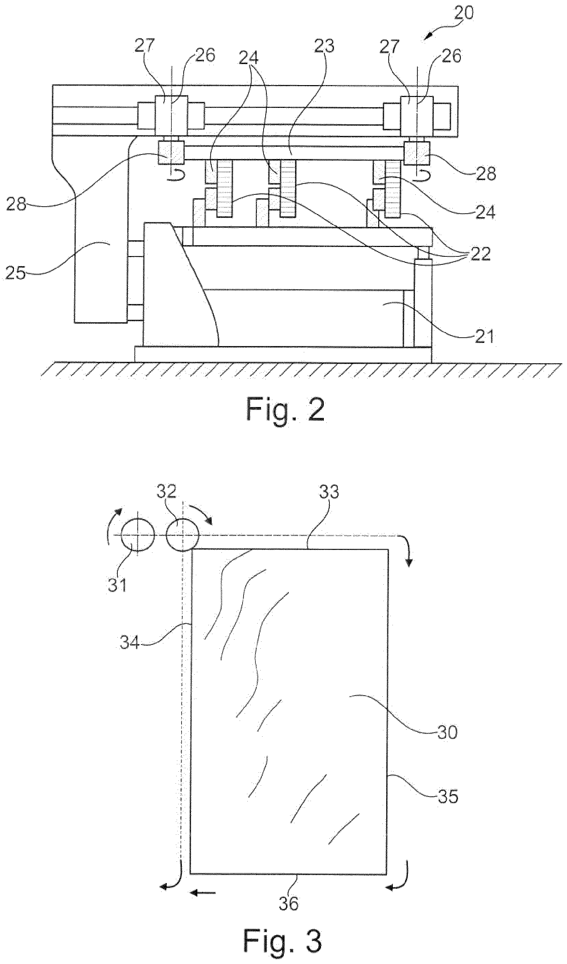

Die Figur 2 zeigt in einer schematischen Darstellung eine erste Bearbeitungsvorrichtung 20 in einer Seitenansicht. Die Bearbeitungsvorrichtung 20 weist einen Werkstücktisch 21 mit Werkstücktransportmitteln 22 zum Zuführen und Abführen des Werkstücks 23 auf. Ist das Werkstück 23 zugeführt, so halten Werkstückhaltemittel 24 das Werkstück 23. Dabei sind die Werkstückhaltemittel 24 ansteuerbare Spannmittel, mittels welchen das Werkstück 23 für den Bearbeitungsschritt fest arretierbar ist. So können die Spannmittel beispielsweise Vakuumspannelemente oder Greifer oder ähnliches sein, mittels welchen das Werkstück 23 festgehalten werden kann.

Weiterhin weist die Bearbeitungsvorrichtung zumindest ein Vorschubmittel 25 auf, welches gegenüber dem Werkstücktisch 21 verlagerbar angeordnet ist. Dieses Vorschubmittel 25 weist einen Arm, Ausleger oder Portal auf, der relativ zum Werkstücktisch 21 verlagerbar angeordnet ist.

Weiterhin sind Werkzeugmittel 26 vorgesehen, mittels welchen das Werkstück 23 bearbeitbar ist. Die Werkzeugmittel 26 sind an dem Vorschubmittel 25 verlagerbar angeordnet. Die Figur 2 zeigt ein Ausführungsbeispiel, bei welchem zwei Werkzeugmittel 26 vorgesehen sind, die unabhängig entlang des Vorschubmittels 25 verlagerbar sind. Entsprechend sind die Werkzeugmittel 26 entlang des Vorschubmittels 25 in einer Richtung verlagerbar und mit der Verlagerung des Vorschubmittels 25 in einer zweiten Richtung verlagerbar. Das Werkzeugmittel 26 oder die Werkzeugmittel 26 ist oder sind dabei ein Fräs-, Säge- und/oder Bohrmittel, welches bzw. welche einen Antrieb 27 umfasst oder umfassen, zum Antreiben eines entsprechenden Werkzeugs 28. Weiterhin ist vorzugsweise ein nicht dargestellter Antrieb zum Verlagern des Werkzeugmittels 26 oder der Werkzeugmittel 26 entlang des Vorschubmittels 25 vorgesehen.

Die Werkstücktransportmittel 22 sind vorzugsweise als Band-, Ketten-, Schlitten- und/oder Rollentransportvorrichtung ausgebildet. Dabei wird ein möglicherweise eingesetztes Zahnriementransportmittel auch als Bandtransportvorrichtung betrachtet.

Vorteilhaft ist die erste Bearbeitungsvorrichtung 20 gekapselt, um einen Lärmschutz und/oder Staubschutz zu realisieren.

Die Figur 3 zeigt in einer schematischen Darstellung die Anordnung eines Werkstücks 30 mit zwei Werkzeugmitteln 31. Dabei kann das erste Werkzeug mittel 32 entlang der Seite 33 verfahren werden, so dass die Seite 33 bearbeitet wird. Anschließend können die beiden Werkzeugmittel 31, 32 über die Vorschubmittel 25 entlang der Seiten 34, 35 verfahren werden, um diese Seiten 34, 35 zu bearbeiten. Danach kann das Werkzeugmittel 32 wieder entlang der Seite 36 verfahren werden, um diese Seite zu bearbeiten.

So können vier Seiten eines Werkstücks 30 mit zwei Werkzeugmitteln 31, 32 bearbeitet werden, die entlang eines Vorschubmittels 25 in einer Richtung verlagerbar sind und die mit dem Vorschubmittel 25 in einer zweiten Richtung verlagerbar sind.

Dabei kann das Werkstück bezüglich Maß und Winkel endbearbeitet werden.

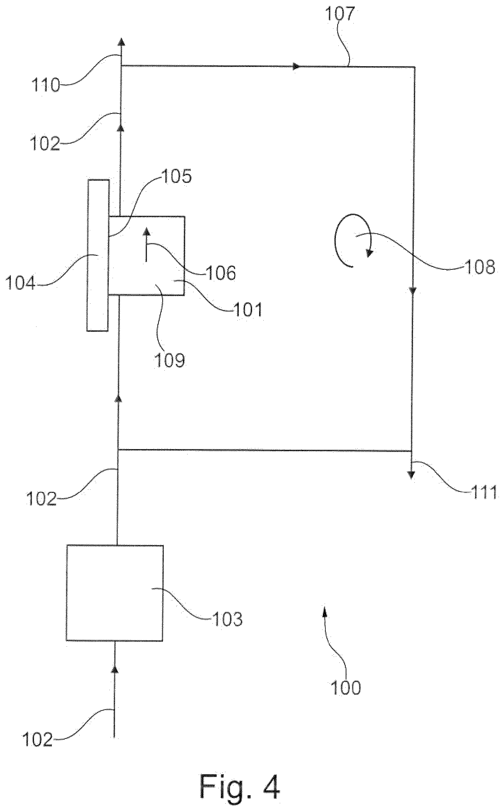

Die Figuren 4 bis 9 zeigen Beispiele von Vorrichtungen in schematischen Darstellungen.

Die Figur 4 zeigt in schematischer Darstellung eine Vorrichtung 100 zum Bearbeiten von Werkstücken 101 gemäß Figur 1 mit einer Transportvorrichtung 102 zum Transport der Werkstücke 101. Es ist eine erste Bearbeitungsvorrichtung 103 zur Formatbearbeitung der umlaufenden Seiten des Werkstücks 101 vorgesehen. Dabei kann die erste Bearbeitungsvorrichtung 103 als Bearbeitungsvorrichtung zur Formatbearbeitung die umlaufende Kante des Werkstücks 101 vollständig oder auch nur teilweise bearbeiten, soweit dies benötigt bzw. erwünscht ist. Dies gilt auch generell für die ersten Bearbeitungsvorrichtungen der anderen dargestellten bzw. beschriebenen Ausführungsbeispiele.

Von der ersten Bearbeitungsvorrichtung 103 wird das Werkstück 101 mittels der Transportvorrichtung 102 zur weiteren zweiten Bearbeitungsvorrichtung 104 transportiert, welche eine Ausrichtvorrichtung zum Ausrichten des Werkstücks 101 zur weiteren Bearbeitung einer ersten Seite 105 des Werkstücks 101 in Bewegungsrichtung 106 des Werkstücks 101 umfasst oder die gesondert vorgesehen ist. Die zweite Bearbeitungsvorrichtung 104 dient der Bearbeitung einer ersten Seite 105 des Werkstücks 101 in Bewegungsrichtung 106 des Werkstücks 101.

Weiterhin ist eine Rückführeinrichtung 107 vorgesehen, mittels welcher das Werkstück 101 zur Ausrichtvorrichtung der zweiten Bearbeitungsvorrichtung 104 zurückführbar ist, zur Bearbeitung einer der weiteren Seiten des Werkstücks 101 in Bewegungsrichtung. Dabei ist in der Rückführeinrichtung 107 eine Dreheinrichtung 108 vorgesehen, mittels welcher das Werkstück 101 um einen vordefinierten Winkel drehbar ist, so dass nach der Bearbeitung der Seite 105 im Anschluss daran eine weitere Seite 109 bearbeitbar ist. Ist die Seite 109 bearbeitet, so kann anschließend das Werkstück erneut gedreht werden, so dass eine nachfolgende weitere Seite bearbeitet wird. Dies kann so oft durchgeführt werden, bis alle Seiten des Werkstücks 101 bearbeitet sind. Im Bereich 110 derTransportvorrichtung 102 und/oder im Bereich 111 der Rückführeinrichtung 107 kann das jeweilige Werkstück auch aus der Bearbeitungsvorrichtung ausgeschleust werden.

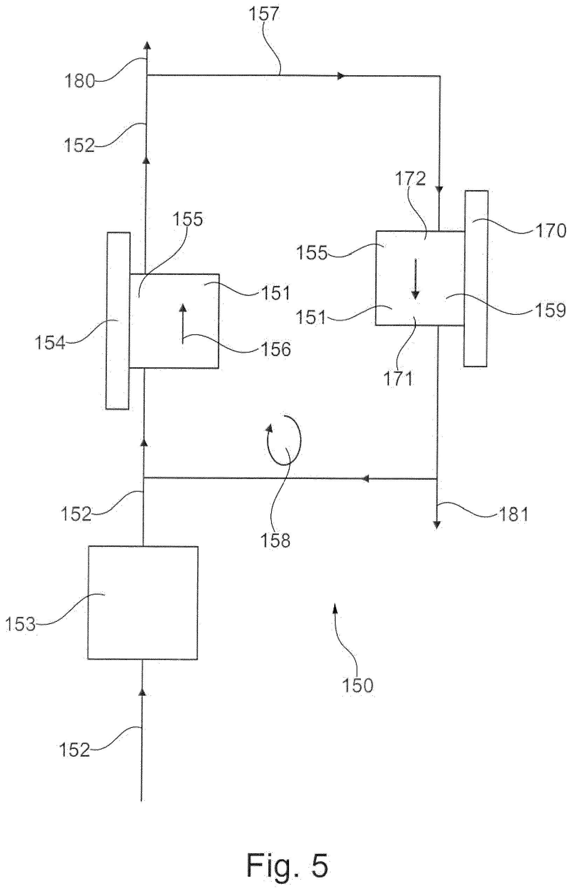

Die Figur 5 zeigt in schematischer Darstellung eine Vorrichtung 150 zum Bearbeiten von Werkstücken 151 mit einer Transportvorrichtung 152 zum Transport der Werkstücke 151. Es ist eine erste Bearbeitungsvorrichtung 153 zur Formatbearbeitung der umlaufenden Seiten des Werkstücks 151 vorgesehen. Dabei kann die erste Bearbeitungsvorrichtung 153 als Bearbeitungsvorrichtung zur Formatbearbeitung die umlaufende Kante des Werkstücks 151 vollständig oder auch nur teilweise bearbeiten, soweit dies benötigt bzw. erwünscht ist. Dies gilt auch generell für die ersten Bearbeitungsvorrichtungen der anderen dargestellten bzw. beschriebenen Ausführungsbeispiele.

Von der ersten Bearbeitungsvorrichtung 153 wird das Werkstück 151 mittels der Transportvorrichtung 152 zur weiteren zweiten Bearbeitungsvorrichtung 154 transportiert, welche eine Ausrichtvorrichtung zum Ausrichten des Werkstücks 151 zur weiteren Bearbeitung einer ersten Seite 155 des Werkstücks 151 in Bewegungsrichtung 156 des Werkstücks 151 umfasst oder die gesondert vorgesehen ist. Die zweite Bearbeitungsvorrichtung 154 dient der Bearbeitung einer ersten Seite 155 des Werkstücks 151 in Bewegungsrichtung 156 des Werkstücks 151.

Weiterhin ist eine Rückführeinrichtung 157 vorgesehen, mittels welcher das Werkstück 151 zur Ausrichtvorrichtung der zweiten Bearbeitungsvorrichtung 154 zurückführbar ist, zur Bearbeitung einer der weiteren Seiten des Werkstücks 151 in Bewegungsrichtung.

Dabei ist in der Rückführeinrichtung 157 eine weitere dritte Bearbeitungsvorrichtung 170 angeordnet, mittels welcher eine weitere Seite 159 des Werkstücks 151 bearbeitbar ist. Der dritten Bearbeitungsvorrichtung 170 kann ebenso eine Ausrichtvorrichtung zugeordnet oder in diese integriert sein.

Dabei ist in der Rückführeinrichtung 157 eine Dreheinrichtung 158 vorgesehen, mittels welcher das Werkstück 151 um einen vordefinierten Winkel drehbar ist, so dass nach der Bearbeitung der Seiten 155 und 159 im Anschluss daran eine weitere Seite 171 bearbeitbar ist. Ist die Seite 171 bearbeitet, so kann anschließend auch die Seite 172 mit der dritten Bearbeitungsvorrichtung 170 bearbeitet werden.

Im Bereich 180 der Transportvorrichtung 152 und/oder im Bereich 181 der Rückführeinrichtung 157 kann das jeweilige Werkstück 151 auch aus der Bearbeitungsvorrichtung ausgeschleust werden.

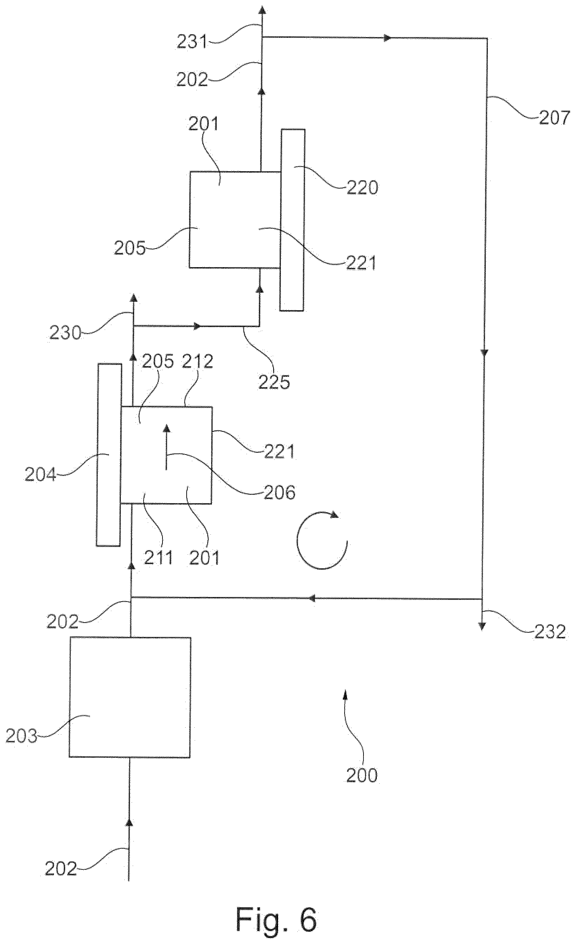

Die Figur 6 zeigt in schematischer Darstellung eine Vorrichtung 200 zum Bearbeiten von Werkstücken 201 mit einer Transportvorrichtung 202 zum Transport der Werkstücke 201. Es ist eine erste Bearbeitungsvorrichtung 203 zur Formatbearbeitung der umlaufenden Seiten des Werkstücks 201 vorgesehen. Dabei kann die erste Bearbeitungsvorrichtung 203 als Bearbeitungsvorrichtung zur Formatbearbeitung die umlaufende Kante des Werkstücks 201 vollständig oder auch nur teilweise bearbeiten, soweit dies benötigt bzw. erwünscht ist.

Von der ersten Bearbeitungsvorrichtung 203 wird das Werkstück 201 mittels der Transportvorrichtung 202 zur weiteren zweiten Bearbeitungsvorrichtung 204 transportiert, welche eine Ausrichtvorrichtung zum Ausrichten des Werkstücks 201 zur weiteren Bearbeitung einer ersten Seite 205 des Werkstücks 201 in Bewegungsrichtung 206 des Werkstücks 201 umfasst oder die gesondert vorgesehen ist. Die zweite Bearbeitungsvorrichtung 204 dient der Bearbeitung einer ersten Seite 205 des Werkstücks 201 in Bewegungsrichtung 206 des Werkstücks 201.

Es ist weiterhin eine weitere dritte Bearbeitungsvorrichtung 220 vorgesehen, insbesondere mit einer Ausrichtvorrichtung, so dass eine weitere Seite 221 des Werkstücks 201 bearbeitbar ist. Dazu ist vorteilhaft eine lateral arbeitende Verschiebevorrichtung 225 vorgesehen, mittels welcher das Werkstück 201 seitlich zwischen den beiden Bearbeitungsvorrichtungen verschoben werden kann.

Weiterhin ist eine Rückführeinrichtung 207 vorgesehen, mittels welcher das Werkstück 201 zur Ausrichtvorrichtung der zweiten Bearbeitungsvorrichtung 204 zurückführbar ist, zur Bearbeitung einer der weiteren Seiten des Werkstücks 201 in Bewegungsrichtung. Dabei ist in der Rückführeinrichtung 207 eine Dreheinrichtung 208 vorgesehen, mittels welcher das Werkstück 201 um einen vordefinierten Winkel drehbar ist, so dass nach der Bearbeitung der Seite 205 und 221 im Anschluss daran eine weitere Seite 211 bearbeitbar ist. Ist die Seite 211 bearbeitet, so kann anschließend auch die Seite 212 mit der dritten Bearbeitungsvorrichtung 220 bearbeitet werden.

Im Bereich 230 oder im Bereich 231 der Transportvorrichtung 202 und/oder im Bereich 232 der Rückführeinrichtung 207 kann das jeweilige Werkstück 201 auch aus der Vorrichtung ausgeschleust werden.

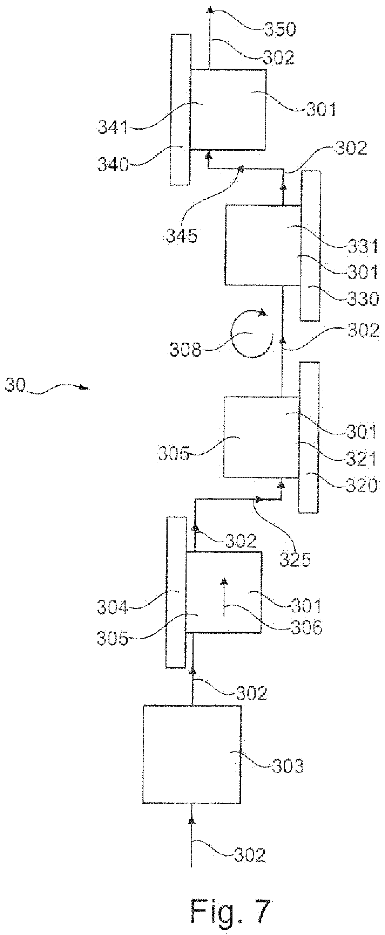

Die Ausführungsbeispiele der Figuren 4 bis 6 zeigen Ausführungsbeispiele, bei welchen eine Bearbeitungsvorrichtung oder zwei Bearbeitungsvorrichtungen vorgesehen sind, um die bereits formatierten Kanten beispielsweise durch Aufbringen von Kantenmaterial zu bearbeiten. Dabei wird gemäß Ausführungsbeispiel der Figur 4 das Werkstück mehrfach an der gleichen zweiten Bearbeitungsvorrichtung 104 vorbei geführt. Bei einer vierseitigen Bearbeitung wären somit vier Durchläufe mit drei Rückführungen notwendig. Die Ausführungsbeispiele der Figuren 5 und 6 zeigen Beispiele mit zwei solchen Bearbeitungsvorrichtungen, so dass die Anzahl der Rückführungen reduziert werden kann, was die Taktzeit der Bearbeitung reduziert. Bei einer vierseitigen Bearbeitung wären somit nur zwei Durchläufe mit nur einen Rückführung notwendig. Die nachfolgenden Ausführungsbeispiele der Figuren 7 bis 9 zeigen nicht erfindungsgemäße Beispiele mit vier solchen

Bearbeitungsvorrichtungen, so dass die Rückführungen nicht mehr notwendig sind, was die Taktzeit der Bearbeitung erneut reduziert. Bei einer vierseitigen Bearbeitung wäre nur ein Durchlauf ohne Rückführung notwendig.

Die Figur 7 zeigt in schematischer Darstellung eine nicht erfindungsgemäße Vorrichtung 300 zum Bearbeiten von Werkstücken 301 mit einer Transportvorrichtung 302 zum Transport der Werkstücke 301. Es ist eine erste Bearbeitungsvorrichtung 303 zur Formatbearbeitung der umlaufenden Seiten des Werkstücks 301 vorgesehen. Dabei kann die erste Bearbeitungsvorrichtung 303 als Bearbeitungsvorrichtung zur Formatbearbeitung die umlaufende Kante des Werkstücks 301 vollständig oder auch nur teilweise bearbeiten, soweit dies benötigt bzw. erwünscht ist.

Von der ersten Bearbeitungsvorrichtung 303 wird das Werkstück 301 mittels der Transportvorrichtung 302 zur weiteren zweiten Bearbeitungsvorrichtung 304 transportiert, welche eine Ausrichtvorrichtung zum Ausrichten des Werkstücks 301 zur weiteren Bearbeitung einer ersten Seite 305 des Werkstücks 301 in Bewegungsrichtung 306 des Werkstücks 301 umfasst oder die gesondert vorgesehen ist. Die zweite Bearbeitungsvorrichtung 304 dient der Bearbeitung einer ersten Seite 305 des Werkstücks 301 in Bewegungsrichtung 306 des Werkstücks 301.

Es ist weiterhin eine weitere dritte Bearbeitungsvorrichtung 320 vorgesehen, insbesondere mit einer Ausrichtvorrichtung, so dass eine weitere Seite 321 des Werkstücks 301 bearbeitbar ist. Dazu ist vorteilhaft eine lateral arbeitende Verschiebevorrichtung 325 vorgesehen, mittels welcher das Werkstück 301 seitlich zwischen den beiden Bearbeitungsvorrichtungen 304, 320 verschoben werden kann. So kann im Wesentlichen die der Seite 305 gegenüberliegende Seite 321 in der dritten Bearbeitungsvorrichtung 320 bearbeitet werden.

Nach der dritten Bearbeitungsvorrichtung 320 ist eine Dreheinrichtung 308 vorgesehen, zum Drehen des Werkstücks 301.

Es ist weiterhin eine weitere vierte Bearbeitungsvorrichtung 330 vorgesehen, insbesondere mit einer Ausrichtvorrichtung, so dass eine weitere Seite 331 des Werkstücks 301 bearbeitbar ist.

Es ist weiterhin eine weitere fünfte Bearbeitungsvorrichtung 340 vorgesehen, insbesondere mit einer Ausrichtvorrichtung, so dass eine weitere Seite 341 des Werkstücks 301 bearbeitbar ist. Dazu ist vorteilhaft eine lateral arbeitende Verschiebevorrichtung 345 vorgesehen, mittels welcher das Werkstück 301 seitlich zwischen den beiden Bearbeitungsvorrichtungen 330, 340 verschoben werden kann. So kann im Wesentlichen die der Seite 331 gegenüberliegende Seite 341 in der fünften Bearbeitungsvorrichtung 340 bearbeitet werden.

Im Bereich 350 kann das jeweilige Werkstück 301 auch aus der Bearbeitungsvorrichtung ausgeschleust werden.

Die Anordnung der Bearbeitungsvorrichtungen ist im Wesentlichen linear, so dass das Werkstück 301 im Wesentlichen nur linear bewegt wird, wenn man von den seitlichen Verschiebungen durch die Verschiebevorrichtungen absieht.

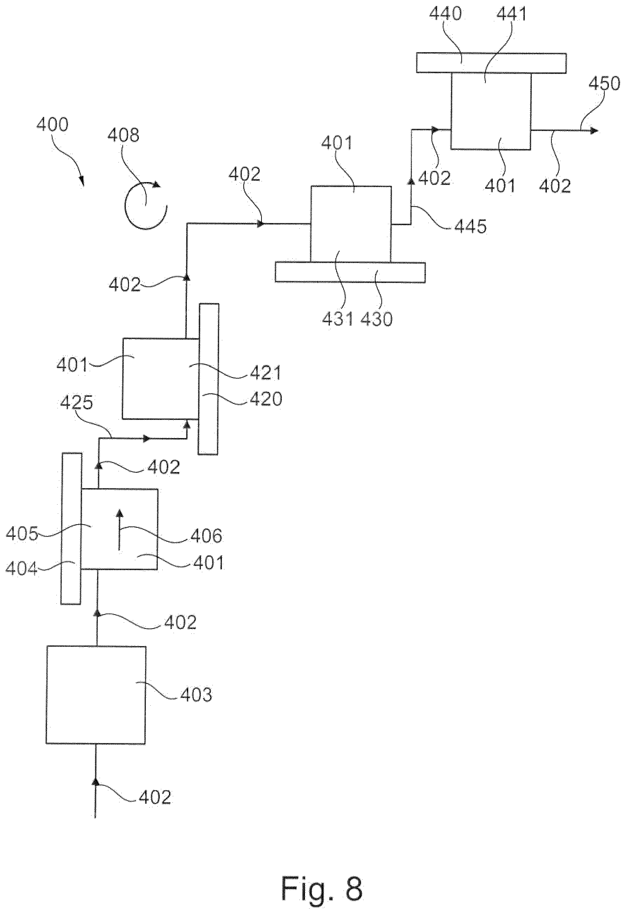

Die Figur 8 zeigt in schematischer Darstellung eine nicht erfindungsgemäße Vorrichtung 400 zum Bearbeiten von Werkstücken 401 mit einer Transportvorrichtung 402 zum Transport der Werkstücke 401. Es ist eine erste Bearbeitungsvorrichtung 403 zur Formatbearbeitung der umlaufenden Seiten des Werkstücks 401 vorgesehen. Dabei kann die Bearbeitungsvorrichtung 403 als Bearbeitungsvorrichtung zur Formatbearbeitung die umlaufende Kante des Werkstücks 401 vollständig oder auch nur teilweise bearbeiten, soweit dies benötigt bzw. erwünscht ist.

Von der ersten Bearbeitungsvorrichtung 403 wird das Werkstück 401 mittels der Transportvorrichtung 402 zur weiteren zweiten Bearbeitungsvorrichtung 404 transportiert, welche eine Ausrichtvorrichtung zum Ausrichten des Werkstücks 401 zur weiteren Bearbeitung einer ersten Seite 405 des Werkstücks 401 in Bewegungsrichtung 406 des Werkstücks 401 umfasst oder die gesondert vorgesehen ist. Die zweite Bearbeitungsvorrichtung 404 dient der Bearbeitung einer ersten Seite 405 des Werkstücks 401 in Bewegungsrichtung 406 des Werkstücks 401.

Es ist weiterhin eine weitere dritte Bearbeitungsvorrichtung 420 vorgesehen, insbesondere mit einer Ausrichtvorrichtung, so dass eine weitere Seite 421 des Werkstücks 401 bearbeitbar ist. Dazu ist vorteilhaft eine lateral arbeitende Verschiebevorrichtung 425 vorgesehen, mittels welcher das Werkstück 401 seitlich zwischen den beiden Bearbeitungsvorrichtungen 404, 420 verschoben werden kann. So kann im Wesentlichen die der Seite 405 gegenüberliegende Seite 421 in der dritten Bearbeitungsvorrichtung 420 bearbeitet werden.

Nach der dritten Bearbeitungsvorrichtung 420 ist eine Dreheinrichtung 408 vorgesehen, zum Drehen des Werkstücks 401.

Vor, nach oder im Bereich der Dreheinrichtung 408 ist eine Abwinkelung der Transportvorrichtung 402 zur Umlenkung der Transportrichtung vorgesehen. Dadurch wird eine Transportvorrichtung 402 mit etwa rechtwinkeliger Gestalt erreicht.

Es ist weiterhin eine weitere vierte Bearbeitungsvorrichtung 430 vorgesehen, insbesondere mit einer Ausrichtvorrichtung, so dass eine weitere Seite 431 des Werkstücks 401 bearbeitbar ist.

Es ist weiterhin eine weitere fünfte Bearbeitungsvorrichtung 440 vorgesehen, insbesondere mit einer Ausrichtvorrichtung, so dass eine weitere Seite 341 des Werkstücks 401 bearbeitbar ist. Dazu ist vorteilhaft eine lateral arbeitende Verschiebevorrichtung 445 vorgesehen, mittels welcher das Werkstück 401 seitlich zwischen den beiden Bearbeitungsvorrichtungen 430, 440 verschoben werden kann. So kann im Wesentlichen die der Seite 431 gegenüberliegende Seite 441 in der fünften Bearbeitungsvorrichtung 440 bearbeitet werden.

Im Bereich 450 kann das jeweilige Werkstück 401 auch aus der Bearbeitungsvorrichtung ausgeschleust werden.

Die Anordnung der Bearbeitungsvorrichtungen ist im Wesentlichen rechtwinklig, so dass das Werkstück 401 im Wesentlichen in zwei linearen Bereichen mit einem Winkel dazwischen bewegt wird, wenn man von den seitlichen Verschiebungen durch die Verschiebevorrichtungen absieht. Dies hat den Vorteil, dass der lineare Platzbedarf gesenkt werden kann.

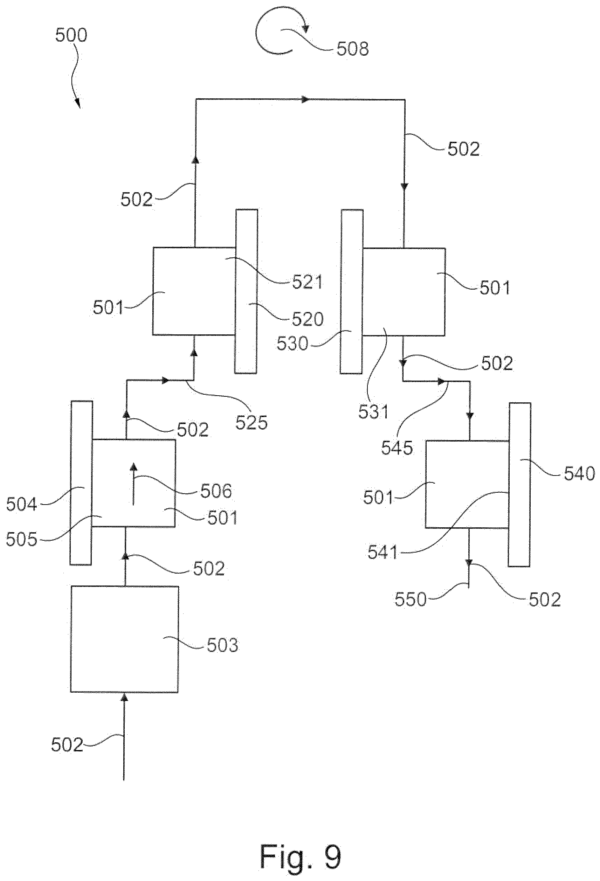

Die Figur 9 zeigt in schematischer Darstellung eine nicht erfindungsgemäße Vorrichtung 500 zum Bearbeiten von Werkstücken 501 mit einer Transportvorrichtung 502 zum Transport der Werkstücke 501. Es ist eine erste Bearbeitungsvorrichtung 503 zur Formatbearbeitung der umlaufenden Seiten des Werkstücks 501 vorgesehen. Dabei kann die erste Bearbeitungsvorrichtung 503 als Bearbeitungsvorrichtung zur Formatbearbeitung die umlaufende Kante des Werkstücks 501 vollständig oder auch nur teilweise bearbeiten, soweit dies benötigt bzw. erwünscht ist.

Von der ersten Bearbeitungsvorrichtung 503 wird das Werkstück 501 mittels der Transportvorrichtung 502 zur weiteren zweiten Bearbeitungsvorrichtung 504 transportiert, welche eine Ausrichtvorrichtung zum Ausrichten des Werkstücks 501 zur weiteren Bearbeitung einer ersten Seite 505 des Werkstücks 501 in Bewegungsrichtung 506 des Werkstücks 501 umfasst oder die gesondert vorgesehen ist. Die zweite Bearbeitungsvorrichtung 504 dient der Bearbeitung einer ersten Seite 505 des Werkstücks 501 in Bewegungsrichtung 506 des Werkstücks 501.

Es ist weiterhin eine weitere dritte Bearbeitungsvorrichtung 520 vorgesehen, insbesondere mit einer Ausrichtvorrichtung, so dass eine weitere Seite 521 des Werkstücks 501 bearbeitbar ist. Dazu ist vorteilhaft eine lateral arbeitende Verschiebevorrichtung 525 vorgesehen, mittels welcher das Werkstück 501 seitlich zwischen den beiden Bearbeitungsvorrichtungen 504, 520 verschoben werden kann. So kann im Wesentlichen die der Seite 505 gegenüberliegende Seite 521 in der dritten Bearbeitungsvorrichtung 520 bearbeitet werden.

Nach der dritten Bearbeitungsvorrichtung 520 ist eine Dreheinrichtung 508 vorgesehen, zum Drehen der Werkstücks 501.

Vor, nach oder im Bereich der Dreheinrichtung 508 ist eine u-förmige Abwinkelung der Transportvorrichtung 502 zur Umlenkung der Transportrichtung vorgesehen. Dadurch wird eine Transportvorrichtung 502 mit etwa u-förmiger Gestalt erreicht.

Es ist weiterhin eine weitere vierte Bearbeitungsvorrichtung 530 vorgesehen, insbesondere mit einer Ausrichtvorrichtung, so dass eine weitere Seite 531 des Werkstücks 501 bearbeitbar ist.

Es ist weiterhin eine weitere fünfte Bearbeitungsvorrichtung 540 vorgesehen, insbesondere mit einer Ausrichtvorrichtung, so dass eine weitere Seite 541 des Werkstücks 501 bearbeitbar ist. Dazu ist vorteilhaft eine lateral arbeitende Verschiebevorrichtung 545 vorgesehen, mittels welcher das Werkstück 501 seitlich zwischen den beiden Bearbeitungsvorrichtungen 530, 540 verschoben werden kann. So kann im Wesentlichen die der Seite 531 gegenüberliegende Seite 541 in der fünften Bearbeitungsvorrichtung 540 bearbeitet werden.

Im Bereich 550 kann das jeweilige Werkstück 501 auch aus der Bearbeitungsvorrichtung ausgeschleust werden.

Die Anordnung der Bearbeitungsvorrichtungen ist im Wesentlichen u-förmig, so dass das Werkstück 501 im Wesentlichen in zwei linearen Bereichen mit einer U-Führung dazwischen bewegt wird, wenn man von den seitlichen Verschiebungen durch die Verschiebevorrichtungen absieht. Dies hat den Vorteil, dass der lineare Platzbedarf gesenkt werden kann.

### Bezugszeichenliste

- 1: Vorrichtung
- 2: Werkstück
- 3: Transportvorrichtung
- 4: erste Bearbeitungsvorrichtung
- 5: zweite Bearbeitungsvorrichtung
- 6: Ausrichtvorrichtung
- 7: Seite
- 8: Rückführeinrichtung
- 9: Seite
- 10: Dreheinrichtung
- 11: Rücktransportvorrichtung
- 12: Werkstückspeicher
- 13: Steigband
- 14: Transfervorrichtung
- 15: Transfervorrichtung
- 20: Bearbeitungsvorrichtung
- 21: Werkstücktisch
- 22: Werkstücktransportmittel
- 23: Werkstück
- 24: Werkstückhaltemittel
- 25: Vorschubmittel
- 26: Werkzeugmittel
- 27: Antrieb
- 28: Werkzeug
- 30: Werkstück
- 31: Werkzeugmittel
- 32: Werkzeugmittel
- 33: Seite
- 34: Seite
- 35: Seite
- 36: Seite
- 100: Vorrichtung
- 101: Werkstück
- 102: Transportvorrichtung
- 103: erste Bearbeitungsvorrichtung
- 104: zweite Bearbeitungsvorrichtung
- 105: Seite
- 106: Bewegungsrichtung
- 107: Rückführeinrichtung
- 108: Dreheinrichtung
- 109: Seite
- 110: Bereich
- 111: Bereich
- 150: Vorrichtung
- 151: Werkstück
- 152: Transportvorrichtung
- 153: erste Bearbeitungsvorrichtung
- 154: zweite Bearbeitungsvorrichtung
- 155: Seite
- 156: Bewegungsrichtung
- 157: Rückführeinrichtung
- 158: Dreheinrichtung
- 159: Seite
- 170: dritte Bearbeitungsvorrichtung
- 171: Seite
- 172: Seite
- 180: Bereich
- 181: Bereich
- 200: Vorrichtung
- 201: Werkstück
- 202: Transportvorrichtung
- 203: erste Bearbeitungsvorrichtung
- 204: zweite Bearbeitungsvorrichtung
- 205: Seite
- 206: Bewegungsrichtung
- 207: Rückführeinrichtung
- 208: Dreheinrichtung
- 211: Seite
- 212: Seite
- 220: dritte Bearbeitungsvorrichtung
- 221: Seite
- 225: Verschiebevorrichtung
- 230: Bereich
- 231: Bereich
- 232: Bereich
- 300: Vorrichtung
- 301: Werkstück
- 302: Transportvorrichtung
- 303: erste Bearbeitungsvorrichtung
- 304: zweite Bearbeitungsvorrichtung
- 305: Seite
- 306: Bewegungsrichtung
- 308: Dreheinrichtung
- 320: dritte Bearbeitungsvorrichtung
- 321: Seite
- 325: Verschiebevorrichtung
- 330: vierte Bearbeitungsvorrichtung
- 331: Seite
- 340: fünfte Bearbeitungsvorrichtung
- 341: Seite
- 345: VerschiebeVorrichtung
- 350: Bereich
- 400: Vorrichtung
- 401: Werkstück
- 402: Transportvorrichtung
- 403: erste Bearbeitungsvorrichtung
- 404: zweite Bearbeitungsvorrichtung
- 405: Seite
- 406: Bewegungsrichtung
- 408: Dreheinrichtung
- 420: dritte Bearbeitungsvorrichtung
- 421: Seite
- 425: Verschiebevorrichtung
- 430: vierte Bearbeitungsvorrichtung
- 431: Seite
- 440: fünfte Bearbeitungsvorrichtung
- 441: Seite
- 445: Verschiebevorrichtung
- 450: Bereich
- 500: Vorrichtung
- 501: Werkstück
- 502: Transportvorrichtung
- 503: erste Bearbeitungsvorrichtung
- 504: zweite Bearbeitungsvorrichtung
- 505: Seite
- 506: Bewegungsrichtung
- 508: Dreheinrichtung
- 520: dritte Bearbeitungsvorrichtung
- 521: Seite
- 525: Verschiebevorrichtung
- 530: vierte Bearbeitungsvorrichtung
- 531: Seite
- 540: fünfte Bearbeitungsvorrichtung
- 541: Seite
- 545: Verschiebevorrichtung
- 550: Bereich

## Patentansprüche

1. Vorrichtung (1) zur Bearbeitung von Werkstücken (2) mit einer Transportvorrichtung (3) zum Transport der Werkstücke (2), mit einer ersten Bearbeitungsvorrichtung (4) zur Formatbearbeitung der umlaufenden Seiten des Werkstücks (2), mit einer Ausrichtvorrichtung (6) zum Ausrichten des Werkstücks (2) zur weiteren Bearbeitung einer ersten Seite (7) des Werkstücks (2) in Bewegungsrichtung des Werkstücks (2) und mit einer zweiten Bearbeitungsvorrichtung (5) zum Bearbeiten der einen ersten Seite (7) des Werkstücks (2) in Bewegungsrichtung des Werkstücks,
**gekennzeichnet durch** eine Rückführeinrichtung (8), mittels welcher das Werkstück (2) um einen vordefinierten Winkel drehbar ist und das Werkstück (2) gedreht zur Ausrichtvorrichtung (6) zurückführbar ist, zur Bearbeitung einer der weiteren Seiten (9) des Werkstücks (2) in Bewegungsrichtung des Werkstücks.

2. Vorrichtung nach Anspruch 1, **dadurch gekennzeichnet, dass** der zweiten Bearbeitungsvorrichtung (5) eine dritte Bearbeitungsvorrichtung zur Bearbeitung einer zweiten Seite des Werkstücks nachgeordnet ist.

3. Vorrichtung nach Anspruch 2, **dadurch gekennzeichnet, dass** die dritte Bearbeitungsvorrichtung der zweiten Bearbeitungsvorrichtung in Bewegungsrichtung des Werkstücks nachgeordnet ist.

4. Vorrichtung nach Anspruch 2 oder 3, **dadurch gekennzeichnet, dass** die dritte Bearbeitungsvorrichtung vor der Rückführeinrichtung oder in der Rückführeinrichtung angeordnet ist.

5. Vorrichtung nach einem der Ansprüche 1 bis 4, **dadurch gekennzeichnet, dass** die Transportvorrichtung (3) derart vorgesehen ist, um ein Werkstück (2) der ersten Bearbeitungsvorrichtung (4) zuzuführen.

6. Vorrichtung nach einem der Ansprüche 1 bis 5, **dadurch gekennzeichnet, dass** mittels der ersten Bearbeitungsvorrichtung (4) die Formatbearbeitung des Werkstücks (2) vornehmbar ist, so dass das Werkstück (2) bezüglich Maß und Winkel endbearbeitbar, wie insbesondere zuschneidbar, ist.

7. Vorrichtung nach einem der vorhergehenden Ansprüche, **dadurch gekennzeichnet, dass** die Rückführeinrichtung (8) derart vorgesehen ist, dass mit einer Dreheinrichtung (10) das Werkstück (2) um einen vordefinierten Winkel um eine Achse senkrecht zur Ebene des Werkstücks (2) drehbar ist, damit in Abhängigkeit der Gestalt des Werkstücks (2) nach der ersten Seite (7) eine zweite Seite (9) bearbeitbar ist.

8. Vorrichtung nach Anspruch 7, **dadurch gekennzeichnet, dass** bei der Bearbeitung eines rechteckigen Werkstücks (2) eine Drehung um 90° oder um ein Vielfaches von 90° vornehmbar ist.

9. Vorrichtung insbesondere nach einem der vorhergehenden Ansprüche, **dadurch gekennzeichnet, dass** in der Rückführeinrichtung (8) ein Werkstückspeicher (12) aufgenommen ist, zum Zwischenspeichern von Werkstücken (2).

10. Vorrichtung nach einem der vorhergehenden Ansprüche, **dadurch gekennzeichnet, dass** die Transportvorrichtung (3) eine Riemen-, Band-, Ketten-, Schlitten- und/oder Rollentransportvorrichtung aufweist, mittels welcher das Werkstück (2) ausgehend von einer Zurverfügungstellung des Werkstücks (2) zur ersten Bearbeitungsvorrichtung (4) und/oder zur zweiten Bearbeitungsvorrichtung (5) transportierbar ist.

11. Vorrichtung nach einem der vorhergehenden Ansprüche, **dadurch gekennzeichnet, dass** die Rückführeinrichtung (8) eine Rücktransportvorrichtung (11) aufweist, welche insbesondere als eine Band-, Ketten-, Schlitten- und/oder Rollentransportvorrichtung ausgebildet ist, mittels welcher das Werkstück (2) entgegen der Transportrichtung der Transportvorrichtung (3) zurück transportierbar ist.

12. Vorrichtung nach einem der vorhergehenden Ansprüche, **dadurch gekennzeichnet, dass** die Rückführeinrichtung (8) zumindest eine erste Transfervorrichtung (14) umfasst, mittels welcher ein Werkstück von der Transportvorrichtung (3) zur Rücktransportvorrichtung (11) verlagerbar ist.

13. Vorrichtung nach Anspruch 12, **dadurch gekennzeichnet, dass** die Rückführeinrichtung (8) zumindest eine zweite Transfervorrichtung (15) umfasst, mittels welcher ein Werkstück (2) von der Rücktransportvorrichtung (11) zur Transportvorrichtung (3) verlagerbar ist.

14. Vorrichtung nach einem der vorhergehenden Ansprüche, **dadurch gekennzeichnet, dass** die zweite Bearbeitungsvorrichtung (5) eine Kantenbearbeitungsvorrichtung ist.

15. Vorrichtung nach Anspruch 14, **dadurch gekennzeichnet, dass** die Kantenbearbeitungsvorrichtung eine Kantenanleimvorrichtung aufweist.

16. Vorrichtung nach Anspruch 14 oder 15, **dadurch gekennzeichnet, dass** die Kantenbearbeitungsvorrichtung eine Kantenversäuberungsvorrichtung aufweist.

17. Vorrichtung nach einem der vorhergehenden Ansprüche, **dadurch gekennzeichnet, dass** die erste Bearbeitungsvorrichtung (20) einen Werkstücktisch (21) mit Werkstücktransportmitteln (22) zum Zuführen und Abführen des Werkstücks (23) und Werkstückhaltemitteln (24) zum Halten des Werkstücks (23) aufweist, und Werkzeugmittel (26) zur Bearbeitung des Werkstücks (23) und Vorschubmittel (25) zum Verlagern der Werkzeugmittel (26) aufweist.

18. Vorrichtung nach Anspruch 17, **dadurch gekennzeichnet, dass** die Werkstücktransportmittel (22) als Band-, Ketten-, Schlitten- und/oder Rollentransportvorrichtung ausgebildet sind.

19. Vorrichtung nach Anspruch 17 oder 18, **dadurch gekennzeichnet, dass** die Werkstückhaltemittel (24) als Spannmittel, wie insbesondere als Vakuumspannelemente oder Greifer, ausgebildet sind.

20. Vorrichtung nach Anspruch 17, 18 oder 19, **dadurch gekennzeichnet, dass** die Werkzeugmittel (26) Fräs-, Säge- und/oder Bohrmittel sind.

21. Vorrichtung nach Anspruch 17, 18, 19 oder 20, **dadurch gekennzeichnet, dass** die Vorschubmittel (25) einen Roboterarm, Arm, Ausleger oder ein Portal aufweisen, entlang dessen die Werkzeugmittel (26) verlagerbar sind.

22. Vorrichtung nach Anspruch 17, 18, 19, 20 oder 21, **dadurch gekennzeichnet, dass** die Vorschubmittel (25) einen verlagerbaren Arm, einen Ausleger oder ein Portal aufweisen, mittels welchem die Werkzeugmittel (26) verlagerbar sind.

23. Vorrichtung nach zumindest einem der Ansprüche 17 bis 22, **dadurch gekennzeichnet, dass** die Werkzeugmittel (26) entlang eines verlagerbaren Arms, Auslegers oder Portals in einer ersten Richtung verlagerbar sind und mittels des Arms, des Auslegers oder des Portals in einer zweiten Richtung verlagerbar sind.

24. Vorrichtung nach einem der vorhergehenden Ansprüche 17 bis 23, **dadurch gekennzeichnet, dass** zwei Werkzeugmittel (26) vorgesehen sind, die unabhängig voneinander entlang des Arms, Auslegers oder Portals verlagerbar sind.

25. Verfahren zur Bearbeitung von Werkstücken (2) mit einer Vorrichtung (1) nach zumindest einem der vorhergehenden Ansprüche, welche eine Transportvorrichtung (3) zum Transport des Werkstücks (2) aufweist, mit einer ersten Bearbeitungsvorrichtung (4) zur Formatbearbeitung der umlaufenden Seiten des Werkstücks (2), mit einer Ausrichtvorrichtung (6) zum Ausrichten des Werkstücks (2) zur weiteren Bearbeitung einer Seite (7) des Werkstücks (2) in Bewegungsrichtung des Werkstücks (2), mit einer zweiten Bearbeitungsvorrichtung (5) zum Bearbeiten der einen Seite (7) des Werkstücks (2) in Bewegungsrichtung des Werkstücks (2), mit einer Rückführeinrichtung (8), mittels welcher das Werkstück (2) um einen vordefinierten Winkel gedreht wird und das Werkstück (2) gedreht zur Ausrichtvorrichtung (6) zurückgeführt wird, zur Bearbeitung einer der weiteren Seiten (9) des Werkstücks (2) in Bewegungsrichtung.

26. Verfahren nach Anspruch 25, **dadurch gekennzeichnet, dass** die Transportvorrichtung (3) ein Werkstück (2) der ersten Bearbeitungsvorrichtung (4) zuführt und/oder von dieser wieder wegführt.

27. Verfahren nach Anspruch 25 oder 26, **dadurch gekennzeichnet, dass** mittels der ersten Bearbeitungsvorrichtung die Formatbearbeitung des Werkstücks vorgenommen wird, so dass das Werkstück bezüglich Maß und Winkel endbearbeitet ist, wie insbesondere mit einem Fertigschnitt zugeschnitten ist.

28. Verfahren nach einem der vorhergehenden Ansprüche 25 bis 27, **dadurch gekennzeichnet, dass** die Rückführeinrichtung (8) derart vorgesehen ist, dass mit einer Dreheinrichtung (10) das Werkstück (2) um einen vordefinierten Winkel um eine Achse senkrecht zur Ebene des Werkstücks (2) gedreht wird, damit in Abhängigkeit der Gestalt des Werkstücks (2) nach der ersten Seite eine zweite Seite (9) bearbeitet wird.

29. Verfahren nach einem der vorhergehenden Ansprüche 25 bis 28, **dadurch gekennzeichnet, dass** die Rückführeinrichtung (8) derart vorgesehen ist, dass mit einer Dreheinrichtung (10) das Werkstück (2) um einen vordefinierten Winkel um eine Achse senkrecht zur Ebene des Werkstücks (2) gedreht wird, damit in Abhängigkeit der Gestalt des Werkstücks (2) nach der n-ten Seite eine (n+1)te Seite bearbeitet wird.

30. Verfahren nach Anspruch 28 oder 29, **dadurch gekennzeichnet, dass** bei der Bearbeitung eines rechteckigen Werkstücks (2) eine Drehung um 90° oder um ein Vielfaches von 90° vorgenommen wird.

31. Verfahren nach einem der vorhergehenden Ansprüche 25 bis 30, **dadurch gekennzeichnet, dass** in der Rückführeinrichtung (8) ein Werkstückspeicher (12) aufgenommen ist, mittels welchem Werkstücke (2) durch Einbringen in den Werkstückspeicher (12) als Zwischenspeicher gespeichert werden können und/oder durch Austragen aus dem Werkstückspeicher (12) als Zwischenspeicher der weiteren Bearbeitung wieder zugeführt werden können.

32. Verfahren nach einem der vorhergehenden Ansprüche 25 bis 31, **dadurch gekennzeichnet, dass** die zweite Bearbeitungsvorrichtung (5) eine Kantenbearbeitungsvorrichtung ist, mittels welcher ein Kantenband auf die Schmalseite des Werkstücks (2) aufgebracht wird und/oder versäubert wird.

33. Verfahren nach einem der vorhergehenden Ansprüche 25 bis 32, **dadurch gekennzeichnet, dass** das Werkstück (2) der ersten Bearbeitungsvorrichtung (4) zugeführt wird, auf einem Werkstücktisch (21) gehalten wird und mit einem Werkzeugmittel (26) zur Bearbeitung des Werkstücks (2) bearbeitet wird.

34. Verfahren nach zumindest einem der vorhergehenden Ansprüche 25 bis 33, **dadurch gekennzeichnet, dass** das oder die Werkzeugmittel (26) entlang eines verlagerbaren Arms, Auslegers oder Portals in einer ersten Richtung verlagert wird oder werden und mittels des Arms, des Auslegers oder des Portals in einer zweiten Richtung verlagert wird oder werden, um das Werkstück zu bearbeiten.

35. Verfahren nach einem der vorhergehenden Ansprüche 25 bis 34, **dadurch gekennzeichnet, dass** zwei Werkzeugmittel (26) vorgesehen sind, die unabhängig voneinander entlang des Arms, Auslegers oder Portals verlagert werden können.

36. Verfahren nach Anspruch 35, **dadurch gekennzeichnet, dass** ein erstes oder ein zweites Werkzeugmittel (26) entlang des Arms, Auslegers oder Portals verlagert wird, um eine erste Seite des Werkstücks (2) zu bearbeiten, wobei das erste und das zweite Werkzeugmittel (26) mit dem Arm, Ausleger oder Portal verlagert werden, um eine zweite und dritte Seite zu bearbeiten und ein erstes oder ein zweites Werkzeugmittel (26) entlang des Arms, Auslegers oder Portals verlagert wird, um eine vierte Seite des Werkstücks (2) zu bearbeiten.

## Claims

1. A device (1) for the processing of work pieces (2) with a transport device (3) for the transport of the work pieces (2), with a first processing device (4) for the shape processing of the circumferential sides of the work piece (2), with an orientation device (6) for the orientation of the work piece (2) for the further processing of a first side (7) of the work piece (2) in the movement direction of the work piece (2) and with a second processing device (5) for the processing of the one first side (7) of the work piece (2) in the movement direction of the work piece, **characterised by** a return means (8) by means of which the work piece (2) can be rotated by a predefined angle and the rotated work piece (2) can be returned to the orientation device (6) for the processing of one of the further sides (9) of the work piece (2) in the movement direction of the work piece.

2. The device according to claim 1, **characterised in that** a third processing device for the processing of a second side of the work piece is arranged downstream of the second processing device (5).

3. The device according to claim 2, **characterised in that** the third processing device is arranged downstream of the second processing device in the movement direction of the work piece.

4. The device according to claim 2 or 3, **characterised in that** the third processing device is arranged before the return means or inside the return means.

5. The device according to one of claims 1 to 4, **characterised in that** the transport device (3) is provided in order to deliver a work piece (2) to the first processing device (4).

6. The device according to one of claims 1 to 5, **characterised in that** the shape processing of the work piece (2) can be carried out by means of the first processing device (4) so that the work piece (2) can be finally processed with regard to dimension and angle, such as in particular cut.

7. The device according to one of the preceding claims, **characterised in that** the return means (8) is provided such that the work piece (2) can be rotated by a predefined angle around an axis perpendicular to the plane of the work piece (2) with a rotation means (10) such that a second side (9) can be processed after the first side (7) depending on the shape of the work piece (2).

8. The device according to claim 7, **characterised in that** a rotation by 90° or by a multiple of 90° can be made during the processing of a rectangular work piece (2).

9. The device in particular according to one of the preceding claims, **characterised in that** a work piece storage (12) for the intermediate storage of work pieces (2) is contained in the return means (8).

10. The device according to one of the preceding claims, **characterised in that** the transport device (3) has a belt, band, chain, carriage and/or roller transport device by means of which the work piece (2) can be transported to the first processing device (4) and/or to the second processing device (5) starting from a provision of the work piece (2).

11. The device according to one of the preceding claims, **characterised in that** the return means (8) has a return transport device (11) which is in particular designed as a band, chain, carriage and/or roller transport device by means of which the work piece (2) can be returned in the transport direction opposing the transport device (3).

12. The device according to one of the preceding claims, **characterised in that** the return means (8) comprises at least one first transfer device (14) by means of which a work piece can be shifted from the transport device (3) to the return transport device (11).

13. The device according to claim 12, **characterised in that** the return means (8) comprises at least one second transfer device (15) by means of which a work piece (2) can be shifted from the return transport device (11) to the transport device (3).

14. The device according to one of the preceding claims, **characterised in that** the second processing device (5) is an edge processing device.

15. The device according to claim 14, **characterised in that** the edge processing device has an edge gluing device.

16. The device according to claim 14 or 15, **characterised in that** the edge processing device has an edge neatening device.

17. The device according to one of the preceding claims, **characterised in that** the first processing device (20) has a work piece table (21) with work piece transport means (22) for delivering and removing the work piece (23) and work piece holding means (24) for holding the work piece (23), and tool means (26) for the processing of the work piece (23) and advancing means (25) for shifting the tool means (26).

18. The device according to claim 17, **characterised in that** the work piece transport means (22) are designed as band, chain, carriage and/or roller transport device.

19. The device according to claim 17 or 18, **characterised in that** the work piece holding means (24) are designed as tensioning means, such as in particular as vacuum tensioning elements or grippers.

20. The device according to claim 17, 18 or 19, **characterised in that** the tool means (26) are milling, sawing and/or drilling means.

21. The device according to claim 17, 18, 19 or 20, **characterised in that** the advancing means (25) have a roboter arm, an arm, a boom or a gantry along which the tool means (26) can be shifted.

22. The device according to claim 17, 18, 19, 20 or 21, **characterised in that** the advancing means (25) have a shiftable arm, a boom or a gantry by means of which the tool means (26) can be shifted.

23. The device according to at least one of claims 17 to 22, **characterised in that** the tool means (26) can be shifted along a shiftable arm, boom or gantry in a first direction and can be shifted in a second direction by means of the arm, the boom or the gantry.

24. The device according to one of the preceding claims 17 to 23, **characterised in that** two tool means (26) are provided which can be shifted independent of each other along the arm, the boom or the gantry.

25. A method for the processing of work pieces (2) with a device (1) according to at least one of the preceding claims, which has a transport device (3) for the transport of the work piece (2), with a first processing device (4) for the shape processing of the circumferential sides of the work piece (2), with an orientation device (6) for the orientation of the work piece (2) for the further processing of a side (7) of the work piece (2) in the movement direction of the work piece (2), with a second processing device (5) for the processing of the one side (7) of the work piece (2) in the movement direction of the work piece (2), with a return means (8) by means of which the work piece (2) is rotated by a predefined angle and the rotated work piece (2) is returned to the orientation device (6), for the processing of one of the further sides (9) of the work piece (2) in the movement direction.

26. The method according to claim 25, **characterised in that** the transport device (3) delivers a work piece (2) to the first processing device (4) and/or removes it therefrom.

27. The method according to claim 25 or 26, **characterised in that** the shape processing of the work piece is carried out by means of the first processing device so that the work piece is finally processed with regard to dimension and angle, such as in particular cut with a final cut.

28. The method according to one of the preceding claims 25 to 27, **characterised in that** the return means (8) is provided such that the work piece (2) is rotated by a predefined angle around an axis perpendicular to the plane of the work piece (2) with a rotation means (10) such that a second side (9) is processed after the first side depending on the shape of the work piece (2).

29. The method according to one of the preceding claims 25 to 28, **characterised in that** the return means (8) is provided such that the work piece (2) is rotated by a predefined angle around an axis perpendicular to the plane of the work piece (2) with a rotation means (10) such that an (n+1) -st side is processed after the n-th side depending on the shape of the work piece (2).

30. The method according to claim 28 or 29, **characterised in that** a rotation by 90° or by a multiple of 90° is made during the processing of a rectangular work piece (2).

31. The method according to one of the preceding claims 25 to 30, **characterised in that** a work piece storage (12) is contained in the return means (8) by means of which work pieces (2) can be stored by introducing into the work piece storage (12) as an intermediate storage and/or can be returned for further processing by removing from the work piece storage (12) as an intermediate storage.

32. The method according to one of the preceding claims 25 to 31, **characterised in that** the second processing device (5) is an edge processing device by means of which an edge band is applied to the narrow side of the work piece (2) and/or neatened.

33. The method according to one of the preceding claims 25 to 32, **characterised in that** the work piece (2) is delivered to the first processing device (4), held on a work piece table (21) and processed with a tool means (26) for the processing of the work piece (2).

34. The method according to at least one of the preceding claims 25 to 33, **characterised in that** the one or the more tool means (26) is or are shifted along a shiftable arm, boom or gantry in a first direction and is or are shifted in a second direction by means of the arm, the boom or the gantry in order to process the work piece.

35. The method according to one of the preceding claims 25 to 34, **characterised in that** two tool means (26) are provided which can be shifted independent from one another along the arm, the boom or the gantry.

36. The method according to claim 35, **characterised in that** a first or a second tool means (26) is shifted along the arm, the boom or the gantry in order to process a first side of the work piece (2), wherein the first and the second tool means (26) are shifted with the arm, the boom or the gantry in order to process a second and a third side and a first or a second tool means (26) is shifted along the arm, the boom or the gantry in order to process a fourth side of the work piece (2).

## Revendications

1. Dispositif (1) servant à l'usinage de pièces (2), ledit dispositif comprenant un dispositif de transport (3) servant au transport des pièces (2), comprenant un premier dispositif d'usinage (4) servant à la mise au format des côtés circonférentiels de la pièce (2), comprenant un dispositif d'alignement (6) servant à l'alignement de la pièce (2) en vue de l'usinage ultérieur d'un premier côté (7) de la pièce (2), suivant la direction de mouvement de la pièce (2), et comprenant un deuxième dispositif d'usinage (5) servant à l'usinage de l'un des premiers côtés (7) de la pièce (2), suivant la direction de mouvement de la pièce, **caractérisé par** un dispositif de retour (8) au moyen duquel la pièce (2) peut être tournée suivant un angle prédéfini, et la pièce (2) ayant été tournée par rapport au dispositif d'alignement (6) peut être ramenée en vue de l'usinage de l'un des autres côtés (9) de la pièce (2), suivant la direction de mouvement de la pièce.

2. Dispositif selon la revendication 1, **caractérisé en ce qu'**un troisième dispositif d'usinage servant à l'usinage d'un deuxième côté de la pièce est disposé en aval du deuxième dispositif d'usinage (5).

3. Dispositif selon la revendication 2, **caractérisé en ce que** le troisième dispositif d'usinage est disposé en aval du deuxième dispositif d'usinage, suivant la direction de mouvement de la pièce.

4. Dispositif selon la revendication 2 ou 3, **caractérisé en ce que** le troisième dispositif d'usinage est disposé en amont du dispositif de retour ou dans le dispositif de retour.

5. Dispositif selon l'une quelconque des revendications 1 à 4, **caractérisé en ce que** le dispositif de transport (3) est prévu de manière telle, qu'une pièce (2) soit fournie au premier dispositif d'usinage (4).

6. Dispositif selon l'une quelconque des revendications 1 à 5, **caractérisé en ce que** la mise au format de la pièce (2) peut être réalisée au moyen du premier dispositif d'usinage (4), de sorte que la pièce (2), concernant les dimensions et les parties angulaires, peut être soumise à un usinage de finition, pouvant en particulier être découpée à dimension.

7. Dispositif selon l'une quelconque des revendications précédentes, **caractérisé en ce que** le dispositif de retour (8) est prévu de manière telle, que la pièce (2) puisse être tournée par un dispositif rotatif (10), suivant un angle prédéfini, autour d'un axe perpendiculaire au plan de la pièce (2), afin que, en fonction de la forme de la pièce (2), un deuxième côté (9) puisse être usiné après le premier côté (7).

8. Dispositif selon la revendication 7, **caractérisé en ce que,** au cours de l'usinage d'une pièce rectangulaire (2), une rotation de 90° ou bien d'un multiple de 90° peut être effectuée.

9. Dispositif en particulier selon l'une quelconque des revendications précédentes, **caractérisé en ce qu'un** magasin de pièces (12) est logé dans le dispositif de retour (8), ledit magasin de pièces servant au stockage intermédiaire de pièces (2).

10. Dispositif selon l'une quelconque des revendications précédentes, **caractérisé en ce que** le dispositif de transport (3) présente un dispositif de transport à courroie, à bande, à chaîne, à chariot et/ou à rouleaux, dispositif de transport au moyen duquel la pièce (2), en partant d'une mise à disposition de la pièce (2), peut être transportée jusqu'au premier dispositif d'usinage (4) et/ou jusqu'au deuxième dispositif d'usinage (5).

11. Dispositif selon l'une quelconque des revendications précédentes, **caractérisé en ce que** le dispositif de retour (8) présente un dispositif de transport en retour (11) qui est conçu en particulier comme un dispositif de transport à bande, à chaîne, à chariot et/ou à rouleaux, dispositif de transport au moyen duquel la pièce (2) peut être transportée en retour dans le sens opposé à la direction de transport du dispositif de transport (3).

12. Dispositif selon l'une quelconque des revendications précédentes, **caractérisé en ce que** le dispositif de retour (8) comprend au moins un premier dispositif de transfert (14) au moyen duquel une pièce peut être déplacée depuis le dispositif de transport (3) jusqu'au dispositif de transport en retour (11).

13. Dispositif selon la revendication 12, **caractérisé en ce que** le dispositif de retour (8) comprend au moins un deuxième dispositif de transfert (15) au moyen duquel une pièce (2) peut être déplacée depuis le dispositif de transport en retour (11) jusqu'au dispositif de transport (3).

14. Dispositif selon l'une quelconque des revendications précédentes, **caractérisé en ce que** le deuxième dispositif d'usinage (5) est un dispositif d'usinage des chants.

15. Dispositif selon la revendication 14, **caractérisé en ce que** le dispositif d'usinage des chants présente un dispositif d'encollage des chants.

16. Dispositif selon la revendication 14 ou 15, **caractérisé en ce que** le dispositif d'usinage des chants présente un dispositif de nettoyage des chants.

17. Dispositif selon l'une quelconque des revendications précédentes, **caractérisé en ce que** le premier dispositif d'usinage (20) présente une table porte-pièce (21) comprenant des moyens de transport de pièces (22) servant à la fourniture et à l'évacuation de la pièce (23) et comprenant des moyens de maintien de pièces (24) servant au maintien de la pièce (23), et présente des moyens d'outillage (26) servant à l'usinage de la pièce (23) et présente des moyens d'avance (25) servant au déplacement des moyens d'outillage (26).

18. Dispositif selon la revendication 17, **caractérisé en ce que** les moyens de transport de pièces (22) sont conçus comme un dispositif de transport à bande, à chaîne, à chariot et/ou à rouleaux.

19. Dispositif selon la revendication 17 ou 18, **caractérisé en ce que** les moyens de maintien de pièces (24) sont conçus comme des moyens de serrage, en particulier comme des éléments de serrage à vide ou des préhenseurs.

20. Dispositif selon la revendication 17, 18 ou 19, **caractérisé en ce que** les moyens d'outillage (26) sont des moyens de fraisage, de sciage et/ou de perçage.

21. Dispositif selon la revendication 17, 18, 19 ou 20, **caractérisé en ce que** les moyens d'avance (25) présentent un bras de robot, un bras, une potence ou un portique, éléments le long desquels les moyens d'outillage (26) peuvent être déplacés.

22. Dispositif selon la revendication 17, 18, 19, 20 ou 21, **caractérisé en ce que** les moyens d'avance (25) présentent un bras déplaçable, une potence ou un portique, éléments à l'aide desquels les moyens d'outillage (26) peuvent être déplacés.

23. Dispositif selon au moins l'une quelconque des revendications 17 à 22, **caractérisé en ce que** les moyens d'outillage (26) peuvent être déplacés le long d'un bras, d'une potence ou d'un portique déplaçables, suivant une première direction, et peuvent être déplacés au moyen du bras, de la potence ou du portique, suivant une deuxième direction.

24. Dispositif selon l'une quelconque des revendications précédentes 17 à 23, **caractérisé en ce qu'il** est prévu deux moyens d'outillage (26) qui peuvent être déplacés indépendamment l'un de l'autre, le long du bras, de la potence ou du portique.

25. Procédé d'usinage de pièces (2) avec un dispositif (1) selon au moins l'une quelconque des revendications précédentes, lequel dispositif présente un dispositif de transport (3) servant au transport de la pièce (2), ledit dispositif comprenant un premier dispositif d'usinage (4) servant à la mise au format des côtés circonférentiels de la pièce (2), comprenant un dispositif d'alignement (6) servant à l'alignement de la pièce (2) en vue de l'usinage ultérieur d'un côté (7) de la pièce (2), suivant une direction de mouvement de la pièce (2), comprenant un deuxième dispositif d'usinage (5) servant à l'usinage de l'un des côtés (7) de la pièce (2), suivant une direction de mouvement de la pièce (2), comprenant un dispositif de retour (8) au moyen duquel la pièce (2) est tournée suivant un angle prédéfini, et la pièce (2) ayant été tournée par rapport au dispositif d'alignement (6) est ramenée en vue de l'usinage de l'un des autres côtés (9) de la pièce (2), suivant une direction de mouvement.

26. Procédé selon la revendication 25, **caractérisé en ce que** le dispositif de transport (3) fournit une pièce (2) au premier dispositif d'usinage (4) et/ou l'éloigne à nouveau de celui-ci.

27. Procédé selon la revendication 25 ou 26, **caractérisé en ce que** la mise au format de la pièce est réalisée au moyen du premier dispositif d'usinage, de sorte que la pièce, concernant les dimensions et les parties angulaires, est soumise à un usinage de finition, étant en particulier découpée à dimension par une coupe de finition.

28. Procédé selon l'une quelconque des revendications précédentes 25 à 27, **caractérisé en ce que** le dispositif de retour (8) est prévu de manière telle, que la pièce (2) soit tournée par un dispositif rotatif (10), suivant un angle prédéfini, autour d'un axe perpendiculaire au plan de la pièce (2), afin que, en fonction de la forme de la pièce (2), un deuxième côté (9) soit usiné après le premier côté.

29. Procédé selon l'une quelconque des revendications précédentes 25 à 28, **caractérisé en ce que** le dispositif de retour (8) est prévu de manière telle, que la pièce (2) soit tournée par un dispositif rotatif (10), suivant un angle prédéfini, autour d'un axe perpendiculaire au plan de la pièce (2), afin que, en fonction de la forme de la pièce (2), un (n^{ième} + 1) côté soit usiné après le n^{ième} côté.

30. Procédé selon la revendication 28 ou 29, **caractérisé en ce que,** au cours de l'usinage d'une pièce rectangulaire (2), une rotation de 90° ou d'un bien multiple de 90° est effectuée.

31. Procédé selon l'une quelconque des revendications précédentes 25 à 30, **caractérisé en ce qu'**un magasin de pièces (12) est logé dans le dispositif de retour (8), magasin de pièces au moyen duquel des pièces (2) peuvent être accumulées par introduction dans le magasin de pièces (12) servant de magasin temporaire et/ou, par extraction hors du magasin de pièces (12) servant de magasin temporaire, peuvent être fournies à nouveau en vue de l'usinage ultérieur.

32. Procédé selon l'une quelconque des revendications précédentes 25 à 31, **caractérisé en ce que** le deuxième dispositif d'usinage (5) est un dispositif d'usinage de chants au moyen duquel une alaise de chant est appliquée sur le petit côté de la pièce (2) et/ou est nettoyée.

33. Procédé selon l'une quelconque des revendications précédentes 25 à 32, **caractérisé en ce que** la pièce (2) est fournie au premier dispositif d'usinage (4), est maintenue sur une table porte-pièce (21) et est usinée avec un moyen d'outillage (26) servant à l'usinage de la pièce (2).

34. Procédé selon au moins l'une quelconque des revendications précédentes 25 à 33, **caractérisé en ce que** le ou les moyen(s) d'outillage (26) est ou sont déplacé(s) le long d'un bras, d'une potence ou d'un portique déplaçables suivant une première direction, et, au moyen du bras, de la potence ou du portique est ou sont déplacé(s) suivant une seconde direction, pour usiner la pièce.

35. Procédé selon l'une quelconque des revendications précédentes 25 à 34, **caractérisé en ce qu'il** est prévu deux moyens d'outillage (26) qui peuvent être déplacés indépendamment l'un de l'autre, le long du bras, de la potence ou du portique.

36. Procédé selon la revendication 35, **caractérisé en ce qu'un** premier ou un deuxième moyen d'outillage (26) est déplacé le long du bras, de la potence ou du portique, pour usiner un premier côté de la pièce (2), où le premier et le deuxième moyen d'outillage (26) sont déplacés avec le bras, la potence ou le portique, pour usiner un deuxième et un troisième côté, et un premier ou un deuxième moyen d'outillage (26) est déplacé le long du bras, de la potence ou du portique, pour usiner un quatrième côté de la pièce (2).
